# EUROPEAN PATENT APPLICATION

(11) **EP 1 650 733 A2**
(43) Date of publication of application: **26.04.2006**
(21) Application number: 05256017.4
(22) Date of filing: 27.09.2005
(51) Int. Cl.: G09G 3/22

(54) **Electron-emitting apparatus**

(30) Priority: 14.10.2004 JP 2004300392; 15.02.2005 JP 2005038151; 25.03.2005 US 665558 P
(71) Applicant: NGK INSULATORS, LTD., Nagoya-City, Aichi Pref. 467-8530 (JP)
(72) Inventor: Ohwada, Iwao, NGK Insulators, Ltd., Nagoya City Aichi-ken, 467-8530 (JP); Akao, Takayoshi, NGK Insulators, Ltd., Nagoya City Aichi-ken, 467-8530 (JP); Kameji, Tetsuyuki, NGK Insulators, Ltd., Nagoya City Aichi-ken, 467-8530 (JP); Nakamura, Hirokazu, NGK Insulators, Ltd., Nagoya City Aichi-ken, 467-8530 (JP)
(74) Representative: Paget, Hugh Charles Edward

(57) **Abstract**

An electron-emitting element has an electron emission unit including a lower electrode, an emitter section composed of a dielectric material, and an upper electrode having a plurality of micro through holes; and a power supply for applying a power supply voltage to the electron emission unit. During the period between the point at which emission of electrons accumulated in the emitter section is started and the point at which the electron emission is completed, the power supply generates a first power supply voltage, whose absolute value changes with forming a sinusoidal wave so that the potential of the upper electrode is higher than the potential of the lower electrode. During the period between the point at which the electron accumulation in the emitter section is started and the point at which the electron accumulation is completed, the power supply generates a second power supply voltage whose absolute value increases with forming a sinusoidal wave so that the potential of the lower electrode is higher than the potential of the upper electrode.

## Description

### BACKGROUND OF THE INVENTION

### 1. Field of the Invention

The present invention relates to electron-emitting apparatus including an element having an emitter section composed of a dielectric material, a lower electrode disposed below the emitter section, and an upper electrode disposed above the emitter portion and having a plurality of micro through holes, the electron-emitting apparatus emitting electrons accumulated in the emitter section through the micro through holes.

### 2. Description of the Related Art

An electron-emitting apparatus (device) having an element which includes an emitter section composed of a dielectric material, a lower electrode disposed on the lower surface of the emitter section, and an upper electrode disposed on the upper surface of the emitter section and having numerous micro through holes has been known in the art. In operation, a drive voltage (pulsed voltage) Vin is applied between the upper and lower electrodes to conduct polarization reversal in the dielectric material and to thereby emit electrons through the micro through holes in the upper electrode. Examples thereof are disclosed in Japanese Patent No. 3160213, Claim 1, paragraphs 0016 to 0019, and Figs. 2 and 3 and United States Patent No. 2,874,802. This type of electron-emitting apparatus is, for example, applied to an element that constitutes pixels of a display in which light is emitted by irradiating the phosphors with electrons. Furthermore, various studies on electron emission from emitter sections composed of dielectric materials are provided in the following literature: Yasuoka and Ishii, "Kyoyudentai inkyoku wo mochiita parusu denshigen (Pulsed electron sources with ferroelectric cathodes)", Oyobutsuri vol. 68, No. 5, pp. 546 to 550 (1999); V. F. Puchkarev, G. A. Mesyats, On the mechanism of emission from the ferroelectric ceramic cathode, J. Appl. Phys., vol 78, No. 9, 1 November, 1995, p.5633-5637; and H. Riege, Electron emission ferroelectrics - a review, Nucl. lnstr. and Meth. A340, p. 80-89 (1994).

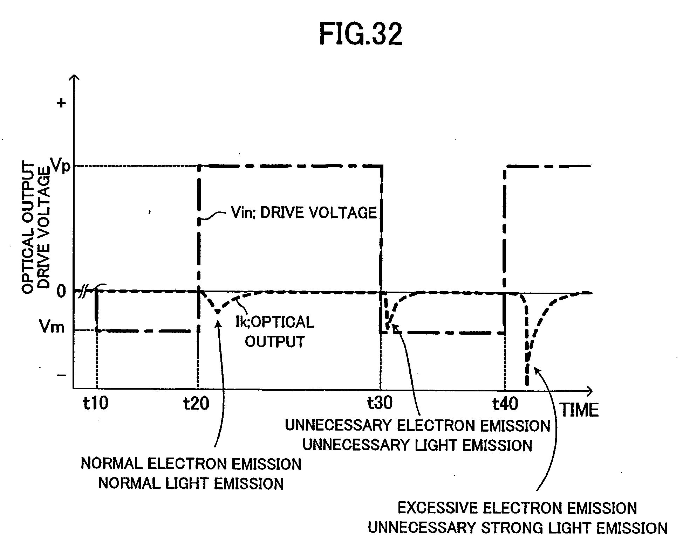

Control of electron emission from the electron-emitting element is conducted as shown in Fig. 32. The electron-emitting apparatus applies a constant voltage Vm serving as the drive voltage Vin between the upper and lower electrodes from a time t10 to a time t20. Here, the constant voltage Vm is for allowing the potential of the lower electrode to be higher than the potential of the upper electrode of the electron-emitting element. By this operation, the orientation of dipoles in the emitter section becomes reversed (negative-side polarization reversal), and electrons are supplied from the upper electrode to the emitter section. As a result, the electrons are accumulated mainly near the upper portion of the emitter section.

Subsequently, from the time t20 to a time t30, the electron-emitting apparatus applies a constant voltage Vp serving as the drive voltage Vin between the upper and lower electrodes. Here, the constant voltage Vp makes the potential of the upper electrode to be higher than the potential of the lower electrode. By this operation, the polarization in the emitter section again becomes reversed (positive-side polarization reversal), and the electrons accumulated near the upper portion of the emitter section are emitted upward through the micro through holes in the upper electrode by Coulomb repulsion. Accordingly, in a device equipped with phosphors opposing the upper electrodes, the phosphors are irradiated with the electrons and thus emit light.

The electron-emitting apparatus repeats these operations. That is, at the time t30, the electron-emitting apparatus again starts applying the constant voltage Vm between the upper and lower electrodes so that the potential of the lower electrode becomes higher than the potential of the upper electrode. Subsequently, at a time t40, the constant voltage Vp for making the potential of the upper electrode higher than the potential of the lower electrode is again applied between the upper and lower electrodes to conduct electron emission (light emission) again. As described above, the electron-emitting apparatus applies rectangular wave pulses between the upper and lower electrodes so as to repeat accumulation and emission of electrons.

However, the electron-emitting apparatus is a capacitive element containing a resistance component and dielectric loss. Thus, when the above-described drive voltage Vin that varies stepwise is applied between the upper and lower electrodes, large part of the work of the power supply is converted to heat by Joule heat or by dielectric loss. Furthermore, in a case where a protect resistor is connected to the electron-emitting element in series, the actual voltage Vka between the upper and lower electrodes does not vary immediately with respect to the drive voltage Vin that varies stepwise as above In other words, the actual voltage Vka gradually varies toward the applied drive voltage Vin. Note that the actual voltage Vka is defined by a potential of the upper electrode with respect to (or measured from) a potential of the lower electrode, i.e., a potential difference obtained by subtracting a potential of the lower electrode from a potential of the upper electrode, and is hereinafter referred to as "element terminal voltage Vka".

Thus, during the period starting from switching of the drive voltage Vin from the constant voltage Vp to the constant voltage Vm or vise versa and ending at the point where the element terminal voltage Vka becomes equal to the applied constant voltage Vp or Vm, a large amount of Joule heat is generated in the element and in the resistance component near the element. As a result, energy is wastefully consumed and the element and the like become excessively heated.

Moreover, as shown in Fig. 32, the inventor has found that electrons are sometimes emitted at unexpected timings or excessively immediately after the time t30 (the time at which application of the constant voltage Vm for electron accumulation is started) or immediately after the time t40 (the time at which application of the constant voltage Vp for electro emission is started). If such unexpected electron emission occurs in a light-emitting element for a display or the like which utilizes the electron-emitting apparatus, a problem arises in which light is emitted at unexpected timings or abnormally strong light emission occurs.

### SUMMARY OF THE INVENTION

One of objects of the present invention is to overcome the problems described above. In particular, the present invention provides an electron-emitting apparatus having an electron emission unit including an electron-emitting element having an emitter section made (composed) of a dielectric material, a lower electrode disposed below the emitter section, and an upper electrode disposed above the emitter section so as to oppose the lower electrode with the emitter section therebetween, the upper electrode having a plurality of micro through holes, a surface of a periphery of each micro through hole facing the emitter section being apart from the emitter section by a predetermined distance; and a power supply for generating a power supply voltage applied to the electron emission unit.

The electrons are accumulated in the emitter section and the accumulated electrons are emitted through the micro through holes by application of the power supply voltage. During the period from the point at which the emitter section of the electron-emitting element has electrons accumulated therein till at earilest the point at which the amount of the electron emitted through the micro through holes per unit time reaches the maximum, the power supply generates, as the power supply voltage, a first power supply voltage whose absolute value varies with forming a sinusoidal wave so that the potential of the upper electrode is higher than the potential of the lower electrode, and during the period from the point at which no electrons are accumulated in the emitter section till at earliest the point at which the emitter section has accumulated electrons, the power supply generates, as the power supply voltage, a second power supply voltage whose absolute value increases with forming a sinusoidal wave so that the potential of the lower electrode is higher than the potential of the upper electrode.

The electron emission unit may include a protect resistor connected to the electron-emitting element in series.

With this structure, the first power supply voltage described above serving as the power supply voltage is applied to the electron emission unit at least during the period between the point at which the emitter section of the electron-emitting element has electrons accumulated therein and the point at which the amount of the electron emitted through the micro through holes per unit time reaches the maximum.

Moreover, the second power supply voltage described above serving as the power supply voltage is applied to the electron emission unit at least during the period between the point at which no electrons are accumulated in the emitter section and the point at which the emitter section has accumulated electrons.

Accordingly, the absolute value of the power supply voltage (drive voltage) applied to the electron emission unit gradually increases with forming a sinusoidal wave both at the beginning of electron accumulation and at the beginning of the electron emission. Thus, the absolute value of the element terminal voltage Vka (the difference in potential between the upper and lower electrodes) also gradually increases by or with tracking the power supply voltage. As a result, since the difference between the power supply voltage and the element terminal voltage can be decreased, Joule heat can be decreased and unnecessary power consumption can be reduced.

In addition, because a large amount of the Joule heat is generated, the temperature of the electron-emitting element is prevented from excessively increasing. Thus, changes in characteristics of the emitter section due to heat can be avoided. It also becomes possible to suppress vaporization of substances adhering onto the electron-emitting element and to thereby reduce excess electron emission and to avoid damage on the electron-emitting element inflicted by ion bombardment.

Furthermore, after application of the first power supply voltage for electron emission is started, the absolute value of the first power supply voltage gradually increases. As a result, the inrush current in the emitter section can be reduced, and the rate of change in element terminal voltage after completion of the positive-side polarization reversal in the emitter section caused by application of the first power supply voltage can be decreased. Thus, it becomes possible to avoid both unnecessary electron emission (unnecessary light emission when the apparatus is equipped with phosphors opposing the upper electrode, i.e., is applied to a display) caused by inrush current and unnecessary electron emission (unnecessary light emission) caused by a rapid change in element voltage immediately after the positive-side polarization reversal.

Moreover, after application of the second power supply voltage for electron accumulation and after completion of the negative-side polarization reversal in the emitter section, the absolute value of the second power supply voltage also increases gradually. Thus, unnecessary electron emission at inappropriate timing presumably caused by a rapid change in element terminal voltage upon completion of the negative-side polarization reversal in the emitter section can be prevented.

Here, the phrase "the point at which the emitter section of the electron-emitting element has electrons accumulated therein" includes not only the time point at which the electron accumulation In the emitter section of the electron-emitting element is completed, but also the time point some time after the completion of the electron accumulation. Moreover, this phrase does not necessarily mean that the maximum amount of electrons are accumulated in the emitter section. It is sufficient for the electrons to be accumulated in an amount sufficient for emission at "the point at which the emitter section of the electron-emitting element has electrons accumulated therein". The phrase "the point at which the emitter section has accumulated electrons" includes any time point at which electrons are accumulated in any amount sufficient for electron emission.

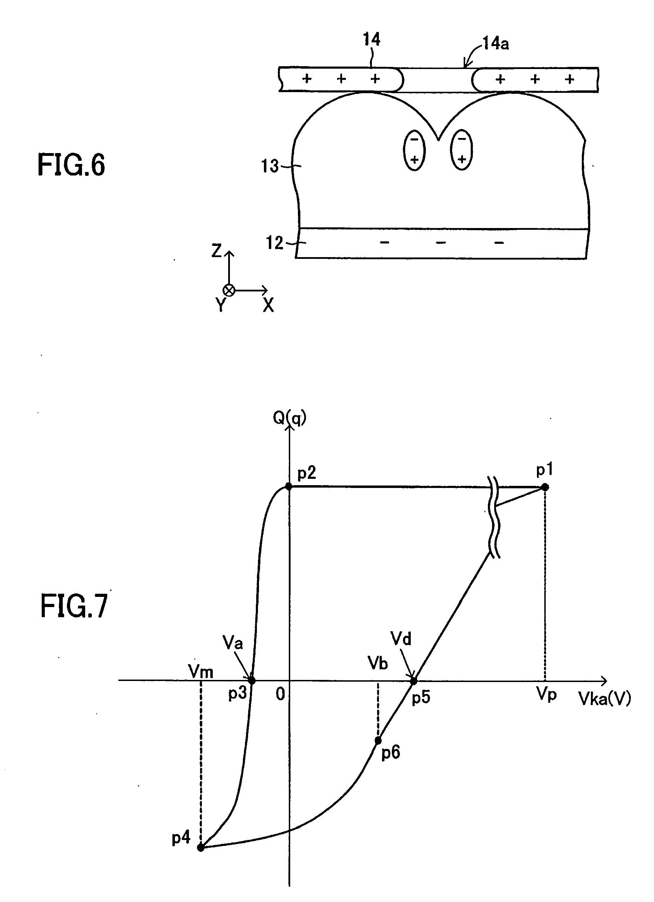

In this type of electron-emitting element, the absolute value of the voltage required for accumulating electrons in an amount required for emission in the emitter section is smaller than the absolute value of the voltage required for emitting the electrons by the same amount from the emitter section through the micro through holes in the upper electrode. This characteristic is called polarization-element terminal voltage characteristic, which is Q-V characteristic shown as shown in Fig. 7. Thus, if the first and second power supply voltages have the same amplitude, one of the first and second power supply voltages is excessively large or small, thereby leading to unnecessary power consumption or inability to emit electrons in a required amount.

Thus, it is preferable that the amplitude of the first power supply voltage is larger than the amplitude of the second power supply voltage.

Also, it is preferable that the power supply has a switching element that switches the voltage applied to the electron emission unit between the first power supply voltage and the second power supply voltage.

This structure enable the apparatus to generate the first and second power supply voltages having different amplitudes and to apply one of the first and second power supply voltages to be applied to the electron emission unit appropriately by switching with using the switching element. Thus, this structure can simplify the circuit for applying the power supply voltage to the electron emission unit. Examples of the switching element include a semiconductor element and a mechanical relay. The semiconductor element above includes a thyristor, a GTO (a gate turn-off thyristor), a TRIAC (three-terminal bidirectional thyristor), and a power transistor such as a MOS-FET.

The power supply preferably has a transformer, connected to a single alternating source generating a sinusoidal alternating voltage, which produces the first power supply voltage and the second power supply voltage by transforming the sinusoidal alternating voltage supplied from the single alternating source.

With the transformer described above, the first and second power supply voltages which are sinusoidal and have different amplitudes each other can be easily produced from a single alternating source. Moreover, it becomes possible to use a commercial power supply (which is an alternating source generating a sinusoidal alternating voltage) as the power supply for the electron-emitting element.

In the electron-emitting apparatus of the present invention, the power supply preferably comprises
a single transformer including a primary winding and a secondary winding in which a sinusoidal alternating voltage generated from a single alternating source is applied to the primary winding, for extracting (outputting) a potential difference between a reference position of the secondary winding and a first position of the secondary winding so that the potential difference (between the reference position of the secondary winding and the first position of the secondary winding) can be used as a voltage for generating the first power supply voltage, and for extracting a potential difference between the reference position of the secondary winding and a second position of the secondary winding so that the potential difference (between the reference position of the secondary winding and the second position of the secondary winding) can be used as a voltage for generating the second power supply voltage;
a reference connecting line connecting a lower electrode-side end of the electron emission unit to the reference position of the secondary winding;
a first connecting line connecting an upper electrode-side end of the electron emission unit to the first position of the secondary winding;
a rectifier which is inserted into the first connecting line in series and which is biased in the forward direction (i.e., forward-biased) when the potential of the first position of the secondary winding is higher than the potential of the upper electrode-side end of the electron emission unit;
a second connecting line connecting the upper electrode-side end of the electron emission unit to the second position of the secondary winding; and
a switching element which is inserted into the second connecting line in series and which changes its state from a current-blocking state to a state in which the switching element allows passage of current in response to a switching control signal input thereto while the switching element is in the current-blocking state.

With the features described above, it becomes possible, by using a single transformer connected to a single alternating power supply (a commercial power supply for example), a single rectifier, and a single switching element, to generate the first and second power supply voltages and to apply these voltages to the electron emission unit at selective and desirable timings.

The power supply may comprise
a single transformer including a primary winding and a secondary winding in which a sinusoidal alternating voltage generated from a single alternating source is applied to the primary winding, for extracting (outputting) a potential difference between a reference position of the secondary winding and a first position of the secondary winding so that the potential difference (between the reference position of the secondary winding and the first position of the secondary winding) can be used as a voltage for generating the first power supply voltage, and for extracting a potential difference between the reference position of the secondary winding and a second position of the secondary winding so that the potential difference (between the reference position of the secondary winding and the second position of the secondary winding) can be used as a voltage for generating the second power supply voltage;
a reference connecting line connecting an upper electrode-side end of the electron emission unit to the reference position of the secondary winding;
a first connecting line connecting a lower electrode-side end of the electron emission unit to the first position of the secondary winding;
a rectifier which is inserted into the first connecting line in series and which is biased in the forward direction (i.e., forward-biased) when the potential of the first position of the secondary winding is lower than the potential of the lower electrode-side end of the electron emission unit;
a second connecting line connecting the lower electrode-side end of the electron emission unit to the second position of the secondary winding; and
a switching element which is inserted into the second connecting line in series and which changes its state from a current-blocking state to a state in which the switching element allows passage of current in response to a switching control signal input thereto while the switching element is in the current-blocking state.

With the features described above, it also becomes possible, by using a single transformer connected to a single alternating power supply (a commercial power supply for example), a single rectifier, and a single switching element, to generate the first and second power supply voltages and to apply these voltages to the electron emission unit at selective and desirable timings.

The power supply preferably is configured to generate the switch control signal based on the alternating voltage generated from the single alternating source.

With this feature, no other power supply for generating the switch control signal is necessary, and the circuit for generating the switch control signal can be simplified.

It is also preferable that the power supply is configured to generate the switch control signal by dividing an alternating voltage synchronous with the alternating voltage generated from the single alternating source with using a divider circuit including a resistor.

An example of the switching element is a thyristor. In such a case, the switch control signal is a gate signal (gate voltage). The switching element may be a MOS-FET. In such a case, the switch control signal is a voltage of the gate with respect to a voltage of the source of the MOS-FET. Other switching elements may also be used. According to the above-described structure, because the switch control signal is generated by dividing an alternating voltage synchronous with the alternating voltage generated from the single alternating source with using a divider circuit including a resistor, the switch control signal can be generated by a significantly simple circuit. Thus, the cost of the power supply can be decreased.

Preferably, in the electron-emitting apparatus having the divider circuit, the alternating voltage synchronous with the alternating voltage generated from the single alternating source is the difference between a voltage at a third position of the secondary winding of the single transformer and a voltage at a fourth position of the secondary winding of the single transformer.

This feature does not require additional power supply, transformer, and the like for generating the switch control signals. Thus, a less expensive electron-emitting apparatus can be provided.

Further, in the case described above, at least one of the resistors included in the divider circuit is preferably a variable resistor.

By varying the resistance of the variable resistor, the timing of switching between the first and second power supply voltages can be controlled with a simple configuration. Since the timing of switching can be easily adjusted, the element terminal voltage of the electron-emitting element during the electron accumulation can be controlled. Thus, the amount of electrons emitted can be controlled.

### BRIEF DESCRIPTION OF THE DRAWINGS

Fig. 1 is a partial cross-sectional view of an electron-emitting apparatus according to a first embodiment of the present invention;
Fig. 2 is a partial cross-sectional view of the electron-emitting apparatus shown in Fig. 1, taken along a different plane;
Fig. 3 is a partial plan view of the electron-emitting apparatus shown in Fig. 1;
Fig. 4 is an enlarged partial cross-sectional view of the electron-emitting apparatus shown in Fig. 1;
Fig. 5 is an enlarged partial plan view of an upper electrode shown in Fig. 1;
Fig. 6 shows a state of the electron-emitting element shown in Fig. 1;
Fig. 7 is a graph showing the polarization-element terminal voltage characteristic (Q-V characteristic) of the electron-emitting element shown in Fig. 1;
Fig. 8 is a time chart for explaining the operational principle of the electron-emitting apparatus shown in Fig. 1;
Fig. 9 shows yet another state of the electron-emitting element shown in Fig. 1;
Fig. 10 shows yet another state of the electron-emitting element shown in Fig. 1;
Fig. 11 shows yet another state of the electron-emitting element shown in Fig. 1;
Fig. 12 shows yet another state of the electron-emitting element shown in Fig. 1;
Fig. 13 shows yet another state of the electron-emitting element shown in Fig. 1;
Fig. 14 is a diagram showing electron emission from an electron-emitting element having no focusing electrode;
Fig. 15 is a diagram showing electron emission from the electron-emitting element shown in Fig. 1;
Fig. 16 is a time chart showing the drive voltage, element voltage (element terminal voltage), element current, and optical output when a conventional electron-emitting apparatus performs normal electron emission;
Fig. 17 is a time chart showing the drive voltage, element voltage, element current, and optical output when a conventional electron-emitting apparatus performs unnecessary (abnormal) electron emission;
Fig. 18 is another time chart showing the drive voltage, element voltage, element current, and optical output when a conventional electron-emitting apparatus performs unnecessary (abnormal) electron emission;
Fig. 19 is another time chart showing the drive voltage, element voltage, element current, and optical output when a conventional electron-emitting apparatus performs unnecessary (abnormal) electron emission;
Fig. 20 is a schematic block diagram showing the power supply shown in Fig. 1;
Fig. 21 is a circuit diagram of the power supply shown in Figs. 1 and 20;
Fig. 22 is a time chart showing the power supply voltage generated by the power supply shown in Fig. 21, the element terminal voltage of the electron-emitting element, and the like;
Fig. 23 is a time chart for explaining the method for generating the voltage applied to the gate of the thyristor shown in Fig. 21;
Fig. 24 is a circuit diagram of a power supply according to a second embodiment of the present invention;
Fig. 25 is a time chart showing the power supply voltage generated by the power supply shown in Fig. 24 and the like ;
Fig. 26 is a partial cross-sectional view of an electron-emitting apparatus according to a third embodiment of the present invention;
Fig. 27 is a partial plan view of a modification of the electron-emitting apparatus of the present invention;
Fig. 28 is a partial plan view of another modification of the
electron-emitting apparatus of the present invention;
Fig. 29 is a partial cross-sectional view of yet another modification of the electron-emitting apparatus of the present invention;
Fig. 30 is another partial cross-sectional view of the electron-emitting apparatus shown in Fig. 29;

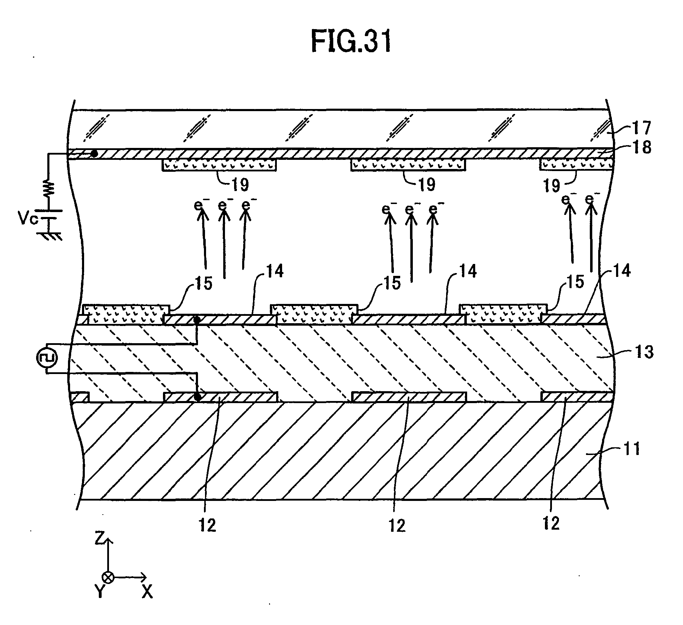

Fig. 31 is a partial cross-sectional view of the electron-emitting apparatus having no focusing electrode; and
Fig. 32 is a time chart showing the drive voltage (power supply voltage) and optical output of the electron-emitting apparatus to which the present invention is applied.

### DESCRIPTION OF THE PREFERRED EMBODIMENTS

Electron-emitting apparatuses according to the preferred embodiments of the present Invention will now be described with reference to the drawings. The electron-emitting apparatus is applicable to electron beam irradiators, light sources, manufacturing apparatuses for electronic components, and the like. In the description below, the electron-emitting apparatuses are applied to displays.

### First Embodiment

### Structure

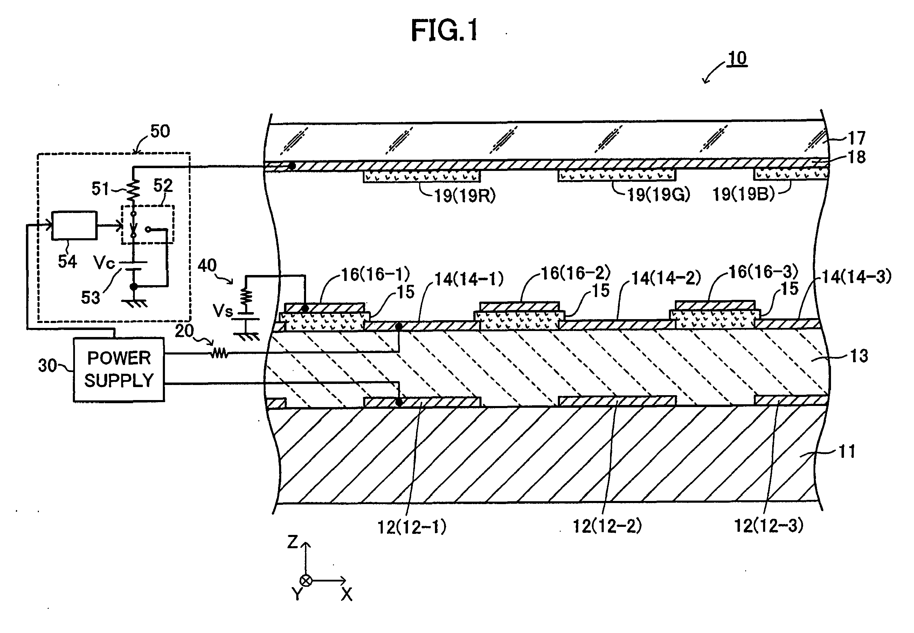

Referring to Figs. 1 to 3, an electron-emitting apparatus according to a first embodiment of the present invention includes an electron-emitting element 10, a protect resistor 20, a power supply 30, a focusing electrode potential applying circuit 40, and a collector voltage applying circuit 50.

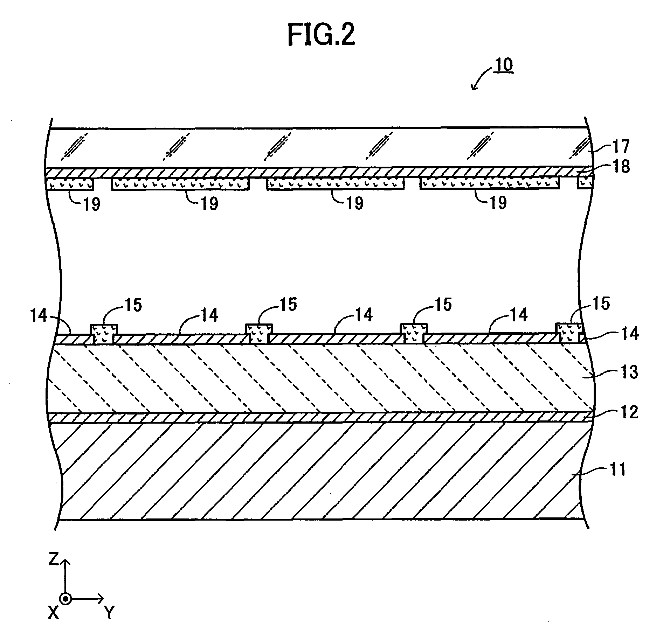

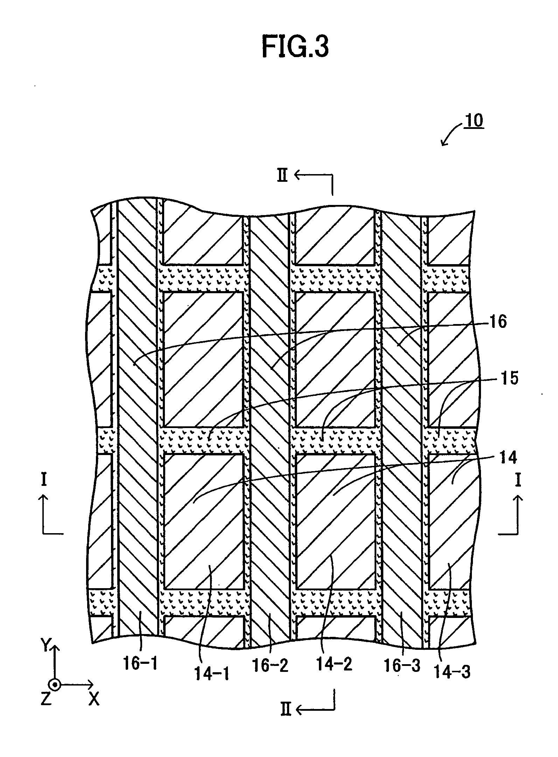

The electron-emitting element 10 has a substrate 11, a plurality of lower electrodes (lower electrode layers) 12, an emitter section 13, a plurality of upper electrodes (upper electrode layers) 14, an insulating layer 15, and a plurality of focusing electrodes (focusing electrode layers) 16. Fig. 1 is a cross-sectional view of the electron-emitting element 10 taken along line I-I in Fig. 3, which is a partial plan view of the electron-emitting element 10. Fig. 2 is a cross-sectional view of the electron-emitting element 10 taken along line II-II in Fig. 3.

The substrate 11 is a thin plate having an upper surface and a lower surface parallel to the plane (X-Y plane) defined by the X axis and the Y axis perpendicular to each other. The thickness direction of the substrate 11 is the Z-axis direction perpendicular to both the X and Y axes. The substrate 11 is made of glass or a ceramic (preferably materials mainly composed of zirconium oxide).

Each of the lower electrodes 12 is a layer composed of a conductive material, e.g., silver or platinum in this embodiment, and is disposed (formed) on the upper surface of the substrate 11. In a plan view, each lower electrode 12 has a shape of a strip, the longitudinal direction of which is the Y-axis direction. As shown in Fig. 1, the adjacent two lower electrodes 12 are apart from each other by a predetermined distance in the X-axis direction. Note that in Fig. 1, the lower electrodes 12 represented by reference numerals 12-1, 12-2, and 12-3 are respectively referred to as a first lower electrode, a second lower electrode, and a third lower electrode for the convenience sake.

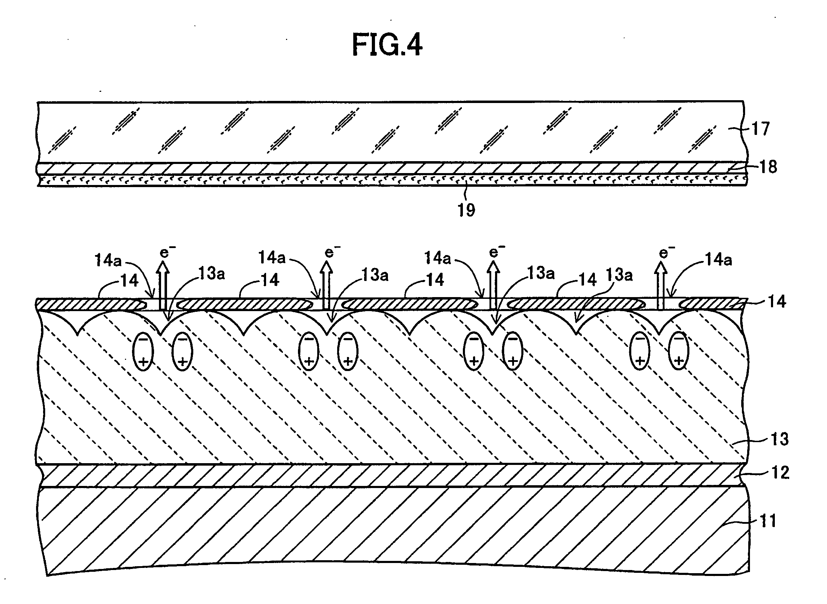

The emitter section 13 is composed of a dielectric material having a high relative dielectric constant or a ferroelectric material, for example, a three-component material PMN-PT-PZ composed of lead magnesium niobate (PMN), lead titanate (PT), and lead zirconate (PZ). Materials for the emitter section 13 will be described in greater detail below. The emitter section 13 is disposed (formed) on the upper surfaces of the substrate 11 and lower electrodes 12. The emitter section 13 is a thin plate similar to the substrate 11. As shown in an enlarged view in Fig. 4, the upper surface of the emitter section 13 has irregularities (asperity) 13a formed by the grain boundaries of the dielectric material.

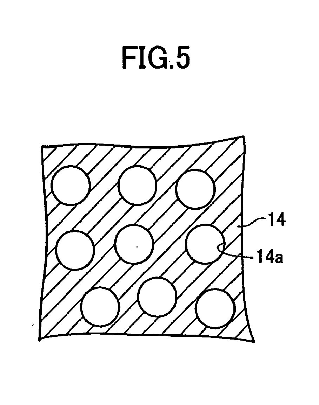

Each of the upper electrodes 14 is a layer composed of a conductive material, i.e., platinum in this embodiment, and is disposed (formed) on the upper surface of the emitter section 13. As shown in a plan view of Fig. 3, each upper electrode 14 has a shape of a rectangle having a short side and a long side respectively lying in the X-axis direction and the Y-axis direction. The upper electrodes 14 are apart (distant) from one another and are arranged into a matrix: Each upper electrode 14 opposes the corresponding lower electrode 12. In a plan view, the upper electrode 14 is disposed at a position that overlaps the corresponding lower electrode 12. Furthermore, as shown in Figs. 4 and Fig. 5, which is a partial enlarged view of the upper electrode 14, each upper electrode 14 has a plurality of micro through holes 14a. Note that in Figs. 1 and 3, the upper electrodes 14 represented by reference numerals 14-1, 14-2, and 14-3 are respectively referred to as a first upper electrode, a second upper electrode, and a third upper electrode for the convenience sake. The upper electrodes 14 aligned in the same row with respect to the X-axis direction (i.e., in the same row extending along the Y-axis direction) are connected to one another by a layer (not shown) composed of a conductor and are maintained at the same electric potential.

Accordingly, this electron-emitting element includes the emitter section 13 composed of the dielectric material, the lower electrode 12 formed below the emitter section 13, and the upper electrode 14 which is disposed above the emitter section 13 to oppose the lower electrode 12 to sandwich the emitter section 13 with the lower electrode 12 and which has the micro through holes 14a. The surface of the upper electrode 14 opposing the emitter section 13 at the periphery of each micro through hole 14a is apart (distant) from the emitter section 13 by a predetermined distance as if to form canopies or eaves.

The lower electrodes 12, the emitter section 13, and the upper electrodes 14 composed of a platinum resinate paste are monolithically integrated by firing (baking). As a result of the firing, the upper electrode 14 shrinks and its thickness of the upper electrode 14 reduces, for example, from 10 µm to 0.1 µm. Thus, the micro through holes 14a are formed in the upper electrode 14.

The portion where an upper electrode 14 overlaps a corresponding lower electrode 12 in a plan view forms one (independent) element for emitting electrons. For example, the first lower electrode 12-1, the first upper electrode 14-1, and the portion of the emitter section 13 sandwiched between the first lower electrode 12-1 and the first upper electrode 14-1 form a first element. The second lower electrode 12-2, the second upper electrode 14-2, and the portion of the emitter section 13 sandwiched between the second lower electrode 12-2 and the second upper electrode 14-2 form a second element. The third lower electrode 12-3, the third upper electrode 14-3, and the portion of the emitter section 13 sandwiched between the third lower electrode 12-3 and the third upper electrode 14-3 form a third element. In this manner, the electron-emitting element 10 includes a plurality of independent electron-emitting elements.

The insulating layers 15 are disposed (formed) on the upper surface of the emitter section 13 so as to fill the gaps between the upper electrodes 14. The thickness (the length in the Z-axis direction) of each insulating layer 15 is slightly larger than the thickness (the length in the Z-axis direction) of each upper electrode 14. As shown in Figs. 1 and 2, the end portions of each insulating layer 15 in the X-axis direction and the Y-axis direction cover the end portions of the upper electrodes 14 in the X-axis and Y-axis directions.

Each of the focusing electrodes 16 is a layer made of a conductive material, i.e., silver in this embodiment, and are disposed (formed) on each of the insulating layers 15. As shown in a plan view of Fig. 3, each focusing electrode 16 has a shape of a strip whose longitudinal direction is the Y-axis direction. Each focusing electrode 16 is disposed (formed) between the adjacent upper electrodes 14 in the X-axis direction in the plan view. In detail, each focusing electrode 16 is disposed between the upper electrodes of the elements adjacent to each other in the X-axis direction and is slightly obliquely above the upper electrodes in the electron emission direction. All of the focusing electrodes 16 are connected to one another with a layer (not shown) composed of a conductor and are maintained at the same potential.

In Figs. 1 and 3, the focusing electrodes 16 represented by reference numerals 16-1, 16-2, and 16-3 are respectively referred to as a first focusing electrode, a second focusing electrode, and a third focusing electrode for the convenience sake. The second focusing electrode 16-2 lies between the first upper electrode 14-1 of the first element and the second upper electrode 14-2 of the second element and is located obliquely above the first and second upper electrodes 14-1 and 14-2. Similarly, the third focusing electrode 16-3 is between the second upper electrode 14-2 of the second element and the third upper electrode 14-3 of the third element and is located obliquely above the second and third upper electrodes 14-2 and 14-3.

This electron emitting apparatus further includes a transparent plate 17, a collector electrode (collector electrode layer) 18, and phosphors 19.

The transparent plate 17 is composed of a transparent material (glass or acrylic resin in this embodiment), and is disposed above the upper electrodes 14 so that the transparent plate 17 is apart from the upper electrodes 14 in the positive direction of the Z axis by a predetermined distance. The upper and lower surfaces of the transparent plate 17 are parallel to the upper surfaces of the emitter section 13 and the upper electrodes 14, and lie in the X-Y plane.

The collector electrode 18 is composed of a conductive material. In this embodiment, the collector electrode 18 is a transparent conductive film composed of indium tin oxide (ITO) and is formed as a layer covering the entire lower surface of the transparent plate 17. In other words, the collector electrode 18 is disposed above the upper electrodes 14 to oppose the upper electrodes 14.

Each phosphor 19 emits red, green, or blue light by the collision of electrons. In a plan view, each phosphor 19 has substantially the same shape as that of the upper electrode 14 and overlaps the corresponding upper electrode 14. In Fig. 1, the phosphors 19 represented by reference numerals 19R, 19G, and 19B respectively emit red, green, and blue light. In this embodiment, the red phosphor 19R is disposed directly above the first upper electrode 14-1 (i.e., in the positive direction of the Z axis), the green phosphor 19G is disposed directly above the second upper electrode 14-2, and the blue phosphor 19B is disposed directly above the third upper electrode 14-3. The space surrounded by the emitter section 13, the upper electrodes 14, the insulating layers 15, the focusing electrodes 16, and the transparent plate 17 (the collector electrode 18) is maintained under substantial vacuum of preferably 10² to 10⁻⁶ Pa and more preferably 10⁻³ to 10⁻⁵ Pa.

In other words, the side walls (not shown) of the electron emitting apparatus, the transparent plate 17, and the collector electrode 18 serve as the members for defining a hermetically closed space (an enclosed space), and this hermetically closed space is maintained under substantial vacuum. The elements (at least the upper part of the emitter section 13 and the upper electrode 14 of each element) of the electron emitting apparatus are disposed inside the hermetically closed space under substantial vacuum.

As is described below, the power supply 30 is configured to generate the drive voltage Vin which serves as the power supply voltage based on a commercial power supply. The power supply 30 is connected to the respective upper electrodes 14 via the protect resistor 20 and is also connected to the lower electrodes 12. The upper electrodes 14 and the protect resistor 20 are referred to as "an electron emission unit EP". Accordingly, the power supply 30 applies the drive voltage Vin to the electron emission unit EP (both ends of the electron emission unit EP).

The focusing electrode potential applying circuit 40 is connected to the focusing electrodes 16 and constantly applies a predetermined negative potential (voltage) Vs to the focusing electrode 16.

A collector voltage applying circuit 50 applies a predetermined voltage (collector voltage) to the collector electrode 18 and includes a resistor (protect resistor or collector resistor) 51, a switching element 52, a constant voltage source 53 for generating a predetermined voltage Vc, and a switch control circuit 54. A first end of the resistor 51 is connected to the collector electrode 18. A second end of the resistor 51 is connected to a fixed connection point of the switching element 52. The switching element 52 is a semiconductor element, such as MOS-FET, and is connected to the switch control circuit 54.

The switching element 52 has two switching points in addition to the above-described fixed connection point. In response to the signal from the switch control circuit 54, the switching element 52 selectively couples the fixed connection point to one of the two switching points. One of the two switching points is earthed, and the other is connected to the anode of the constant voltage source 53. The cathode of the constant voltage source 53 is earthed. The switch control circuit 54 is connected to the power supply 30 and controls the switching of the switching element 52 based on the source voltage.

### Principle and Operation of Electron Emission

The principle of the electron emission from the electron-emitting apparatus having the above-described structure will now be described using a single element as an example. To simplify the explanation below, the drive voltage Vin generated by the power supply 30 is assumed to have rectangular waves different from the drive voltage Vin of the first embodiment.

First, the state is described with reference to Fig. 6 in which the actual potential difference Vka (element terminal voltage Vka) between the lower electrode 12 and the upper electrode 14 with reference to the lower electrode 12 is maintained at a predetermined positive voltage Vp and in which all the electrons in the emitter section 13 have been emitted without remaining in the emitter section 13. At this stage, the negative pole of the dipole in the emitter section 13 is oriented toward the upper surface of the emitter section 13, i.e., oriented in the positive direction of the Z axis toward the upper electrode 14. This state is observed at a point p1 on the graph in Fig. 7. The graph in Fig. 7 shows the polarization-element terminal voltage characteristic (Q-V characteristic) of the electron-emitting element 10 and has the abscissa indicating the element terminal voltage Vka and the ordinate indicating the charge Q near the upper electrode 14.

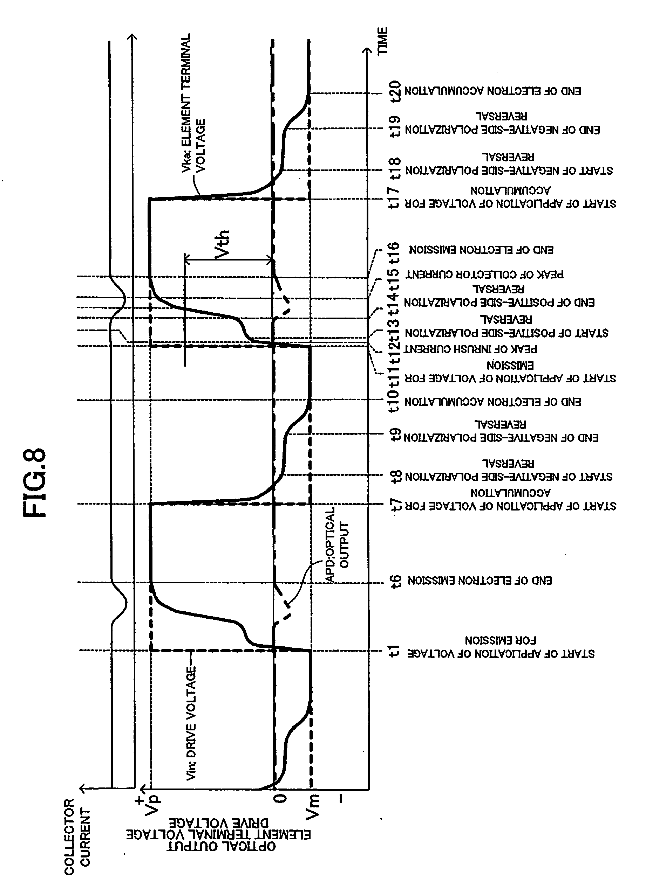

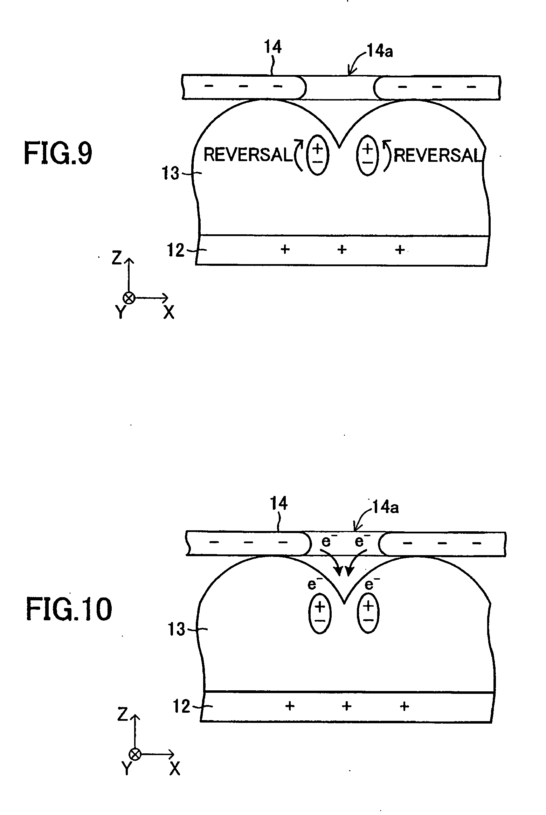

As observed at a time t7 in Fig. 8, the power supply decreases the drive voltage Vin toward a first voltage Vm, which is a negative predetermined voltage. By this operation, the element terminal voltage Vka decreases toward a point p3 via a point p2 in Fig. 7. Once the element terminal voltage Vka is decreased to a voltage near a negative coercive field voltage Va shown in Fig. 7, the orientation of the dipoles in the emitter section 13 starts reversing. In other words, as shown in Fig. 9, the polarization reversal (negative-side polarization reversal) begins. The polarization reversal increases (strengthen) the electric field in the contact sites (triple junctions) between the upper surface of the emitter section 13, the upper electrode 14, and the ambient medium (in this embodiment, vacuum) and/or the electric field at the distal end portions of the upper electrode 14 forming the micro through holes 14a. In other words, electrical field concentration occurs at these sites. As a result, as shown in Fig. 10, the electrons are started to be supplied toward the emitter section 13 from the upper electrodes 14. Since the peripheries of the micro through holes 14a are apart from the emitter section 13 (the upper surface of the emitter section 13) by a particular distance, the concentration of electrical field is particularly high at the peripheries of the micro through hole 14a, and the amount of the electrons supplied from the end portions of the upper electrode 14 toward the emitter section 13 can be increased. At the triple junction, the angle defined by the upper electrode 14 and the upper surface of the emitter section 13 is smaller than 90°. Thus, electrical concentration can be notably increased, and the amount of the electrode supplied can be increased.

The supplied electrons are accumulated mainly in the upper portion of the emitter section 13 near the region exposed through the micro through hole 14a and near the distal end portions of the upper electrode 14 that define the micro through hole 14a. Hereinafter, this portion where the supplied electrons are accumulated is simply referred to as the "portion near the micro through hole 14a". Subsequently, at a time t9 in Fig. 8, the negative-side polarization reversal is completed, and the element terminal voltage Vka rapidly changes toward the first voltage Vm (negative predetermined voltage), eventually reaching the first voltage Vm at a time t10. The electron accumulation is completed, i.e., a saturation state of electron accumulation is reached. This state is observed at a point p4 in Fig. 7.

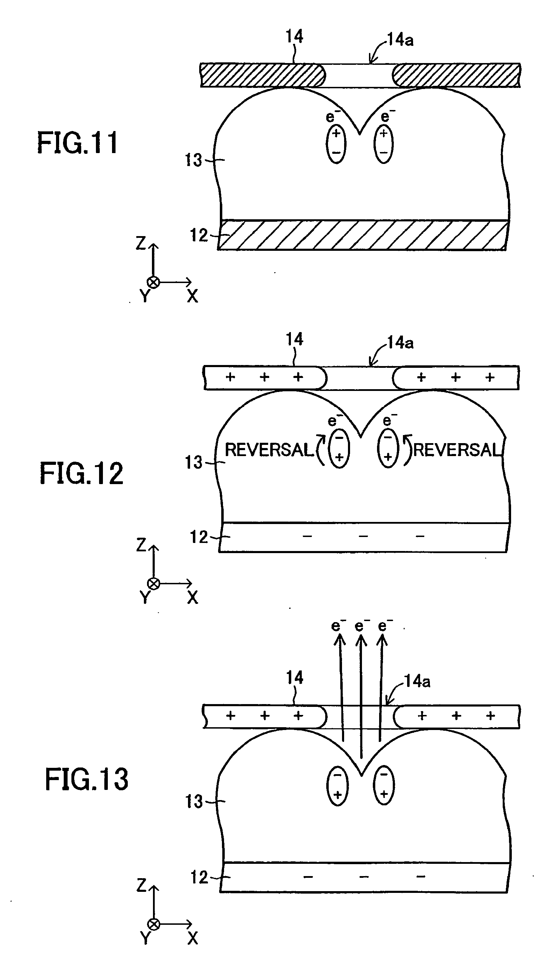

At a time t11 shown in Fig. 8, the power supply changes the drive voltage Vin to the a second voltage Vp, which is a positive predetermined voltage. By this operation, the element terminal voltage Vka starts to increase. Until the element terminal voltage Vka reaches a voltage Vb (point p6) slightly smaller than the a positive coercive field voltage Vd corresponding to a point p5 in Fig. 7, the charge state of the emitter section 13 is maintained, as shown in Fig. 11. Subsequently, at a time t13 shown in Fig. 8, the element terminal voltage Vka reaches a voltage near the positive coercive field voltage Vd. By this operation, the negative pole of the dipole starts to orient toward the upper surface of the emitter section 13. In other words, as shown in Fig. 12, polarization reversal occurs again, i.e., the positive-side polarization reversal begins. This state is observed near the point p5 show in Fig. 7.

Subsequently, at a time near a time t14 in Fig. 8 at which the positive-side polarization reversal is completed, the number of dipoles having negative poles oriented toward the upper surface of the emitter section 13 increases. As a result, as shown in Fig. 13, the electrons accumulated near the micro through holes 14a are started to be emitted through the micro through holes 14a in the upward direction (the positive direction of the Z axis) by Coulomb repulsion.

At a time t14 in Fig. 8, the positive-side polarization reversal is completed. The element terminal voltage Vka starts to rapidly increase, and the electrons are actively emitted. At a time t16, the electron emission is completed, and the element terminal voltage Vka reaches the second voltage Vp. As a result, the emitter section 13 returns to its original state shown in Fig. 6. This state is observed at the point p1 in Fig. 7. This summarizes the principle of a series of operation including electron accumulation (light OFF state) and electron emission (light ON state or emission).

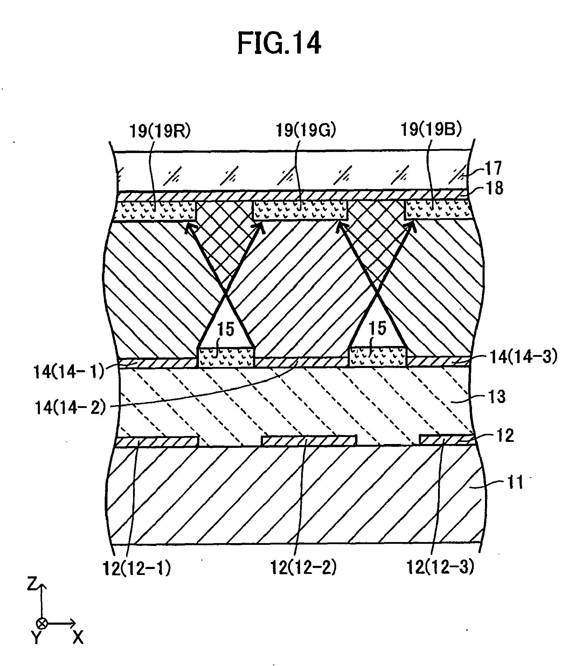

When the electrons are being emitted through the micro through holes 14a in the upper electrode 14, as shown in Fig. 14, the electrons travel in the positive direction of the Z axis with spreading into the shape of a cone. Thus, in an apparatus of the related art, electrons emitted from one upper electrode 14, e.g., the second upper electrode 14-2, reach not only the phosphor 19, e.g., the green phosphor 19G, directly above that upper electrode 14 but also the phosphors 19, e.g., the red phosphor 19R and the blue phosphor 19B, adjacent to this phosphor 19. This decreases color purity and sharpness of images.

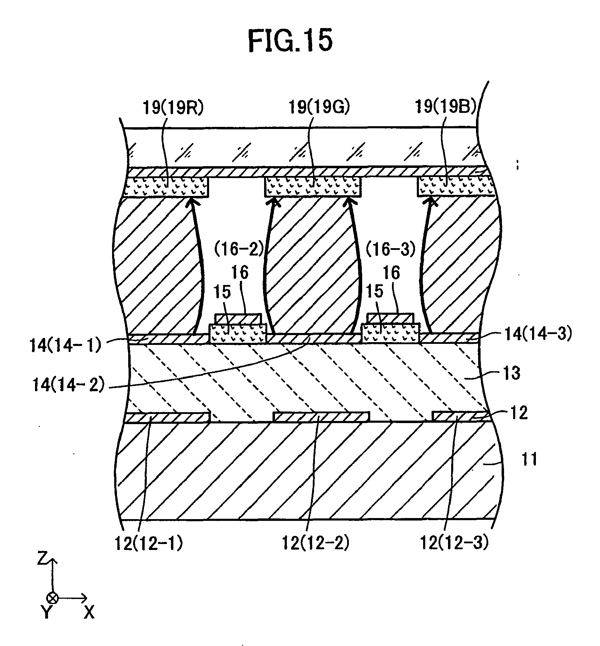

In contrast, the electron-emitting element of this embodiment has focusing electrodes 16 to which a negative potential is applied. Each focusing electrode 16 is interposed between the adjacent upper electrodes 14 (i.e., between the upper electrodes of the adjacent elements) and is disposed at a position slightly above the upper electrodes 14. Thus, as shown in Fig. 15, the electrons emitted from the micro through holes 14a travel substantially directly upward without spreading owing to the electric field applied from the focusing electrode 16.

As a result, the electrons emitted from the first upper electrode 14-1 reach only the red phosphor 19R, the electrons emitted from the second upper electrode 14-2 reach only the green phosphor 19G, and the electrons emitted from the third upper electrode 14-3 reach only the blue phosphor 19B. Thus, the color purity of the display does not decrease, and sharper images can be obtained.

### Unnecessary Electron Emission and Assumption of Reason for Such Emission

In the electron-emitting apparatus that operates as described above, it is understood from the collector current (the amount of electrons reaching the collector electrode per unit time) shown in Fig. 8, that electron emission starts near the time t14 and reaches the maximum emission per unit time at the time t15. The electron emission is completed at the time t16. That is, during this period, proper (regular) emission is observed. However, experiments conducted by the inventors have reported that unexpected emission (unnecessary electron emission) occurs as described below.

### (1) Normal Emission

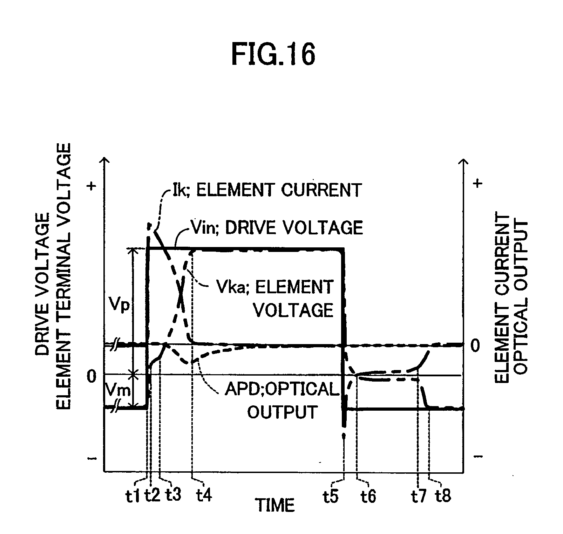

Firstly, the changes in drive voltage Vin, element terminal voltage Vka, element current lk, and optical output APD versus drive voltage Vin that varies in the form of rectangular waves during normal electron emission (light emission) will be described with reference to Fig. 16. Here, the element current lk is current flowing in the portion of the emitter section 13 sandwiched between the lower electrode 12 and the upper electrode 14. The optical output APD is a value obtained by converting the emitted light with an avalanche photodiode. In the graph, the value is indicated as a negative value.

As shown in Fig. 16, when the drive voltage Vin is risen steeply at the time t1 so that it is changed from the first voltage (negative predetermined voltage) Vm to the second voltage (positive predetermined voltage) Vp, a large inrush current flows in the emitter section 13. Accordingly, the element current lk reaches its peak immediately after the time t1 and subsequently reaches zero relatively quickly. On the other hand, between the time t2 to t3 immediately after the time t1, the positive-side polarization reversal occurs. Thus, the element terminal voltage Vka rapidly increases between the time t1 to the time t2 and then moderately increases between the time t2 to the time t3. After the positive-side polarization reversal ends (i.e., the positive coercive field voltage is exceeded) at the time t3, the element terminal voltage Vka increases until the time t4 and becomes equal to the second voltage Vp of the drive voltage Vin thereafter. It is understood from the optical output APD that the electron emission (light emission) starts near the time t3, reaches the maximum immediately before the time t4, and then stops.

When the drive voltage Vin is risen steeply so that it is changed from the second voltage (positive predetermined voltage) Vp to the first voltage (negative predetermined voltage) Vm at the time t5, a large negative inrush current flows in the emitter section 13. Thus, the element current Ik reaches its peak immediately after the time t5. Between the time t6 and the time t7 immediately after the time t5, the negative-polarization reversal occurs. Thus, after a rapid decrease between the time t5 and the time t6, the element terminal voltage Vka stays substantially constant until the time t7. After the negative-side polarization reversal ends (i.e., the negative coercive field voltage is exceeded) at the time t7, the element terminal voltage Vka rapidly decreases until the time t8. At the time t8 and thereafter, the element terminal voltage Vka becomes equal to the first voltage Vm of the drive voltage Vin. Meanwhile, the element current lk rapidly increases toward zero between the time t5 and the time t6, then stays substantially constant until the time t7, and again rapidly increases toward zero between the time t7 and the time t8. As can be understood from Fig. 16, no electron is emitted between the time t5 and the time t8.

### (2) Abnormal Emission (Electron Emission at Inappropriate Timing and Excessive Electron Emission)

Next, the timing of unnecessary electron emission (including excessive electron emission) caused by the drive voltage Vin varying in the form of rectangular waves is explained.

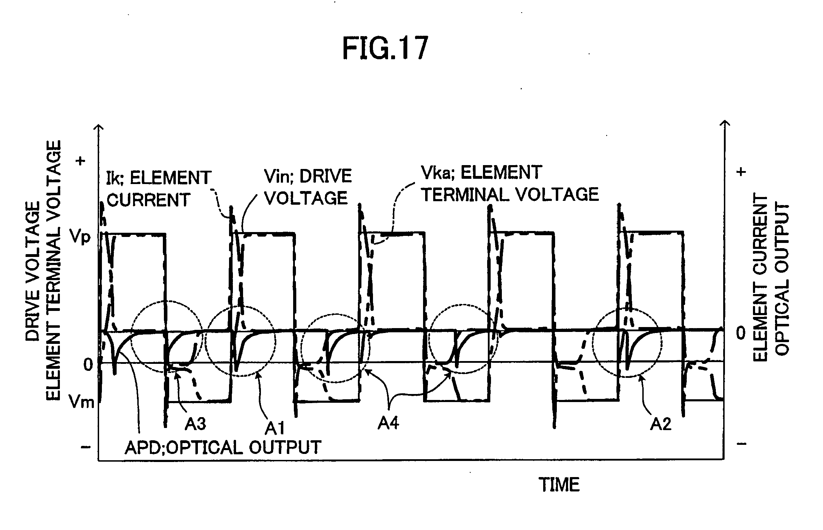

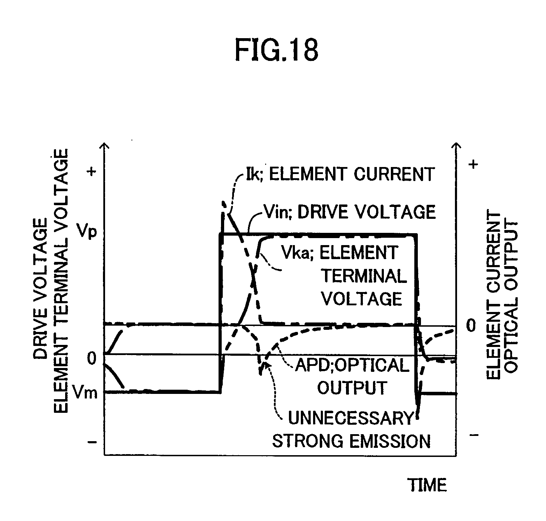

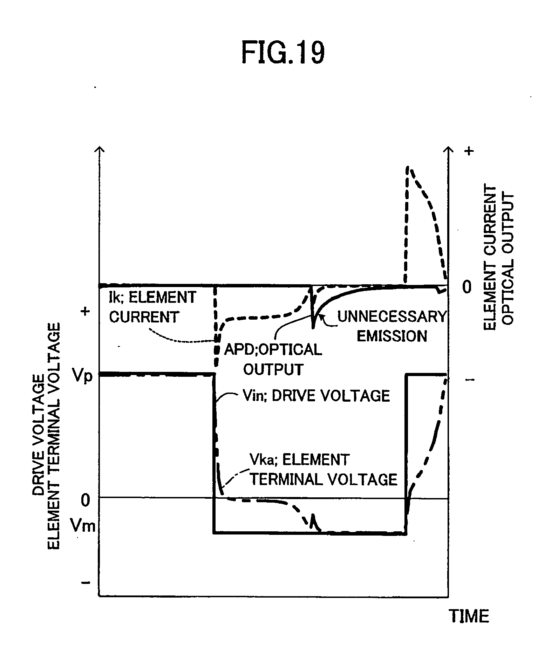

Unnecessary electron emission mainly occurs at the following four time points:
(A) Referring to a region A1 in Fig. 17, unnecessary electron emission occurs immediately after the drive voltage Vin is changed from the first voltage Vm which is a negative predetermined voltage (or from third voltage Vn equal to an intermediate voltage applied for non-selection of element described below) to the second voltage Vp which is a positive predetermined voltage. In other words, unnecessary electron emission occurs immediately after the time t1 and t11 in Fig. 8 and the time t1 in Fig. 16, which is the time point at which the drive voltage Vin is risen to initiate electron emission. This unnecessary electron emission is presumably due to a large inrush current (excessively large element current Ik) flowing between the upper electrode 14 and the lower electrode 12, i.e., in the emitter section 13.
(B) Referring to a region A2 in Fig. 17 and Fig. 18, unnecessary electron emission occurs immediately after the completion of the positive-polarization reversal caused by setting the drive voltage Vin to the second voltage Vp. In other words, unnecessary electron emission occurs immediately after time t14 in Fig. 8 and time t3 in Fig. 16. This unnecessary electron emission is presumably due to a rapid change in element terminal voltage Vka immediately after the completion of the positive-side polarization reversal in the emitter section 13, i.e., immediately after the positive coercive field voltage is exceeded. In other words, this is presumably due to an excessively large rate of change in element terminal voltage Vka over time (dVka/dt).
(C) Referring now to a region A3 in Fig. 17, unnecessary electron emission occurs immediately after the drive voltage Vin is changed from the second voltage Vp which is the positive predetermined voltage to the first voltage Vm which is the negative predetermined voltage. That is, this unnecessary electron emission occurs immediately after the drive voltage Vin is rapidly decreased to initiate electron emission (i.e., immediately after the time t7 and the time t17 in Fig. 8 and the time t5 in Fig. 16). This unnecessary electron emission is presumably due to a large inrush current (excessively large element current Ik) caused by the rapid change in the drive voltage Vin.
(D) Referring to a region A4 in Fig. 17 and Fig. 19, unnecessary electron emission occurs immediately after the completion of the negative-side polarization reversal caused by setting the drive voltage Vin to the first voltage Vm which is the negative predetermined voltage, i.e., immediately after the time t9 and the time t19 in Fig. 8 and the time t7 in Fig. 16. This unnecessary electron emission is presumably due to a rapid change in element terminal voltage Vka after completion of the negative-side polarization reversal in the emitter section 13, i.e., due to an excessively large rate of change in element terminal voltage Vka over time (dVka/dt).

The inventor has conducted further experiments based on the above-described discoveries and reached a conclusion that such abnormal electron emission can be avoided by gradually increasing the drive voltage Vin for electron emission instead of using rectangular waves as the drive voltage Vin. That is, it was found that when increasing the drive voltage Vin to emit electrons, as the rate of change in drive voltage Vin becomes smaller, the peak (maximum) of the element current Ik becomes smaller. In particular, it was found that if the rate of change in drive voltage Vin is adjusted so that the element terminal voltage Vka can follow (or vary closely to ) the drive voltage Vin, the peak of the element current lk can be effectively decreased. It was confirmed that the abnormal electron emission could be avoided in these manner.

Moreover, the inventor has found that abnormal electron emission can be avoided by gradually decreasing the drive voltage Vin in accumulating electrons in the emitter section 13. In other words, also during the period of decreasing the drive voltage Vin to conduct electron accumulation, the peak (maximum) of the element current Ik can be decreased by decreasing the rate of change in drive voltage Vin. It was confirmed that abnormal electron emission could be avoided in this manner.

### Structure and Operation of Power Supply

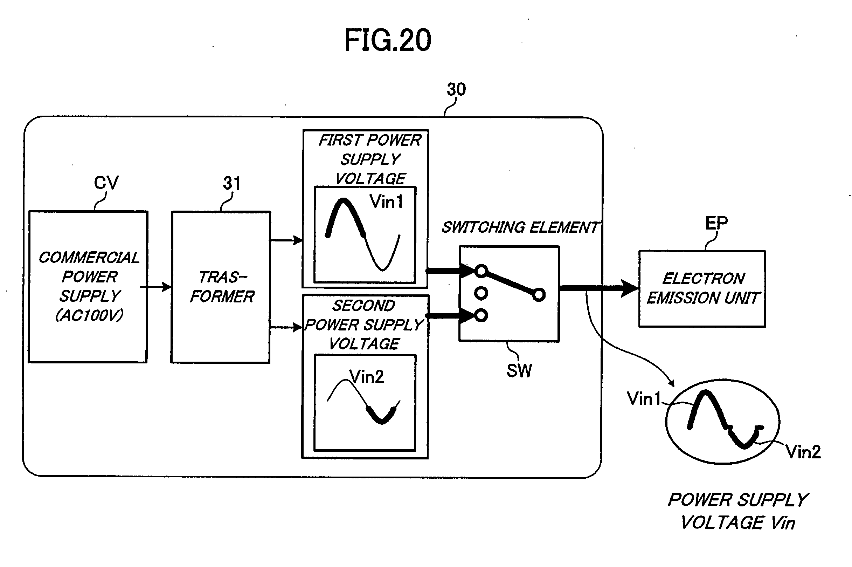

The power supply 30 according to the first embodiment of the present invention is configured based on the findings described above. As shown in the schematic diagram of Fig. 20, the power supply 30 generates a sinusoidal first supply voltage Vin1 and a sinusoidal second supply voltage Vin2 and applies to the electron emission unit EP the drive voltage (supply voltage) Vin formed by appropriately and selectively switching between these two voltages with using a switching element.

Specifically, the power supply 30 is configured to transform voltage from a commercial power supply CV (AC 100 V) using a transformer 31 to generate the first supply voltage Vin1 and the second supply voltage Vin2 synchronous to each other. In addition, the power supply 30 is configured to control switching elements SW to apply the first supply voltage Vin1 or the second supply voltage Vin2 to the electron emission unit EP including the electron-emitting element 10 and the protect resistor 20.

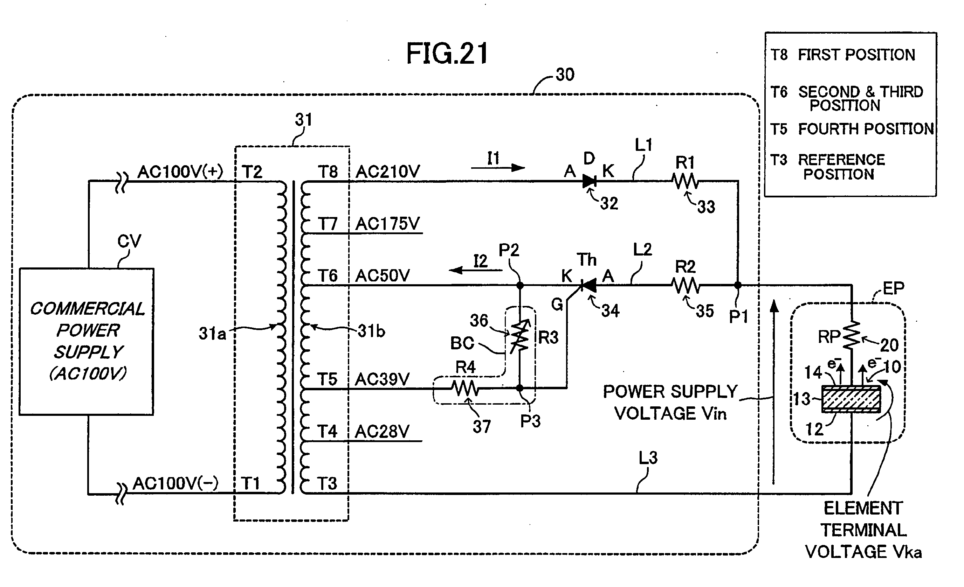

More specifically, as shown in Fig. 21, the power supply 30 includes the transformer 31 (a single transformer), a diode (first rectifier) 32 which is one of the switching elements SW, a first resistor 33, a thyristor (second rectifier) 34 which is one of the switching elements SW, a second resistor 35, a third resistor (fixed or variable) 36, and a fourth resistor 37.

The transformer 31 includes a primary winding 31 a and a secondary winding 31 b. The terminals at the both ends of the primary winding 31 a are respectively referred to as a terminal T1 and a terminal T2. The secondary winding 31 b has a plurality of terminals T3 to T8 at predetermined intervals. The terminal T3 is at the lower end of the secondary winding 31 b and the terminal T8 is at the upper end of the secondary winding 31 b.

The transformer 31 transforms the alternating voltage applied to the terminals T1 and T2 located at both ends of the primary winding 31 a by a particular transformer ratio (2.1 in this embodiment) using electromagnetic induction and thereby generates the transformed voltage between the terminal T8 and the terminal T3 located at both ends of the secondary winding 31b, The terminals T1 and T2 located at both ends of the primary winding 31 a are coupled to a commercial power supply, which is an alternating source. Examples of the commercial power supply available in Japan include AC 100 (V), 60 Hz or 50 Hz power supplies. The terminals T1 and T2 are respectively connected to the AC 100 V (-) and the AC 100 V (+) of the commercial power supply.

Thus, a sinusoidal 210 V alternating voltage (amplitude: about 297 V) is generated at the terminal T8 of the secondary winding 31 b with respect to the reference voltage 0 (V) at the terminal T3. The 210 V alternating voltage generated at the terminal T8 is simply referred to as the "AC 210 V". The same type of nomenclature is applied to voltages for other terminals.

As a result, at the terminals T4, T5, T6, and T7 of the secondary winding 31 b, alternating voltages of 28 V, 39 V, 50 V, and 175 V are respectively generated with respect to the reference voltage at the terminal T3. For the explanation, the position of the terminal T8 is referred to as the "first position" of the secondary winding 31 b, the position of the terminal T6 is referred to as the "second position and third position" of the secondary winding 31 b, and the position of the terminal T5 is referred to as the "fourth position" of the secondary winding 31 b.

The terminal T8 is connected to the anode A of the diode 32 with a connecting line L1. The cathode K of the diode 32 is coupled to a point P1 via the first resistor 33 inserted into the connecting line L1 in series. The point P1 is connected to the upper electrode 14 of the electron-emitting element 10 through the protect resistor 20. As is previously discussed, the electron-emitting element 10 and the protect resistor 20 constitute the electron emission unit EP. Thus, the point P1 is connected to the upper electrode 14-side of the electron emission unit EP.

The terminal T6 is connected to the cathode K of the thyristor 34 with a connecting line L2. The anode A of the thyristor 34 is connected to the point P1 via the second resistor 35 inserted into the connecting line L2 in series.

The terminal T5 is connected to the gate G of the thyristor 34 via the fourth resistor 37. A point P2 between the cathode K of the thyristor 34 and the terminal T6 is connected to a point P3 between the fourth resistor 37 and the gate G of the thyristor 34 through the third resistor 36. Accordingly, the potential at the point P3 is a ptential obtained by dividing a potential difference between the terminal T6 and the terminal T5 by using a divider circuit BC which includes the third resistor 36 and the fourth resistor 37.

In this manner, a voltage in proportion to the difference between the alternating voltage at the terminal T6 (the third position of the secondary winding 31 b) and the alternating voltage at the terminal T5 (the fourth position of the secondary winding 31 b) is applied to the gate G of the thyristor 34. The thyristor 34 opens the gate when the potential of the gate G is greater than the potential of the cathode K by at least a predetermined threshold voltage (e.g., 0.6 V). When a forward bias is applied between the anode A and the cathode K in this state (in which the gate is being open), conduction between the anode A and the cathode K is ensured (i.e., forward current can flow).

The position of the terminal T3 is also referred to as the "reference position of the secondary winding 31 b" for the convenience sake. The terminal T3 is connected to the lower electrode 12 of the electron-emitting element 10 with a connecting line L3, which is a reference connecting line.

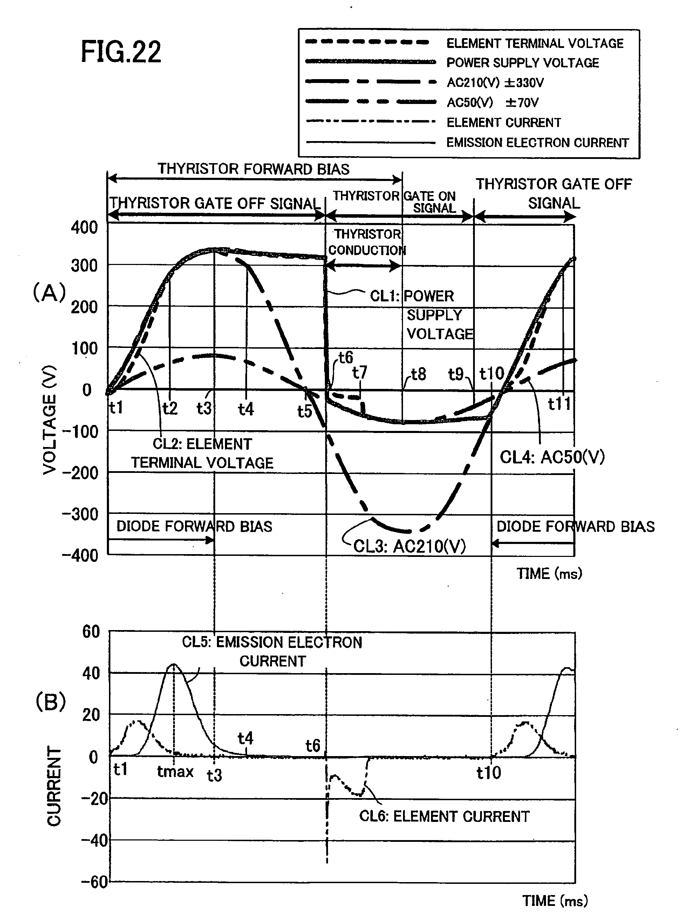

Next, the operation of the power supply 30 having the configuration described above will be described with reference to Figs. 21 to 23. In the description below, the power supply voltage (or the drive voltage Vin) is defined as the potential of the point P1 with respect to the potential of the reference connecting line L3 (or the potential of the terminal T3), i.e., the power supply voltage = potential at P1 - potential at T3. In part (A) of Fig. 22, a curve CL1 in a solid line indicates the power supply voltage, a curve CL2 in a broken line indicates the element terminal voltage, a curve CL3 in an alternate long and short dash line indicates the high alternating voltage AC 210 V at the terminal T8, and a curve CL4 in a two-dot chain line indicates the low alternating voltage AC 50 V at the terminal T6. In part (B) of Fig. 22, a curve CL5 indicates emission electron current. The emission electron current is a current that flows in the collector electrode 18 by electron emission from the electron-emitting element 10. In other words, the emission electron current indicates the amount of electrons emitted per unit time.

Assume that the electrons are accumulated near the upper portion of the emitter section 13 at the time t1. Also assume that the AC 210 V and the AC 50 V at the terminal T8 and the terminal T6 respectively are both zero (V) at the time t1. Under this assumption, the AC 210 V and the AC 50 V gradually increase by forming sinusoidal waves from zero (V) starting from the time t1.

Here, the element terminal voltage Vka is a negative voltage near zero (V). Thus, immediately after the time t1, the potential of the terminal T8 is higher than the potential of the upper electrode 14 of the electron-emitting element 10. Accordingly, a forward bias is applied to the diode 32, and therefore, the diode 32 allows flow of the forward current l1. As a result, the potential of the terminal T8 (the alternating voltage AC 210 V at the terminal T8) is applied to the point P1. In other words, AC 210 V is applied to the upper electrode 14-side of the electron emission unit EP (or it can be said that the AC 210 V is applied to the electron emission unit EP).

Consequently, a current flows toward the electron emission unit EP from the terminal T8 through the connecting line L1 and, furthermore, toward the terminal T3 from the electron emission unit EP. As a result, the element terminal voltage Vka gradually increases with tracking the AC 210 V. Thus, positive-side polarization reversal as described above occurs, and the electrons are emitted through the micro through holes 14a of the upper electrode 14.

At the time t2, the current flowing in the protect resistor 20 and the electron-emitting element 10 becomes very small. As a result, from the time t2, the element terminal voltage Vka varies so that the voltage Vka is substantially equal to the AC 210 V.

At the time t3 after the time t2, the AC 210 V reaches the positive peak (the maximum value which is the same as the amplitude). Thus, from the time t3, the potential at the point P1 (the potential at upper electrode 14-side of the electron emission unit EP) becomes higher than the potential of the terminal T8. Accordingly, the diode 32 is biased in the reverse direction and enters a non-conduction (blocking) state. As a result, the drive voltage Vin does not vary with (follow) the AC 210 V but is maintained at the value at this point of time or gradually decreases due to the leakage current.

Meanwhile, as shown in curve CL5 in part (B) of Fig. 22, the emission electron current reaches the maximum at a time tₘₐₓ which is before the time t3. That is, the power supply 30 generates the first power supply voltage, whose absolute value varies with forming a sinusoidal wave, as the drive voltage Vin, so that the potential of the upper electrode 14 is higher than the potential of the lower electrode 12 and applies the first power supply voltage thus generated to the electron emission unit EP at a particular point of time between the time t1 and the time tₘₐₓ. Here, the time t1 is when the emitter section 13 is in a state in which it has electrons accumulated therein, and the time tₘₐₓ is the time at which the amount of electrons (accumulated in the emitter section 13) being emitted through the micro through holes 14a per unit time reaches the maximum. Note that substantially all of the electrons accumulated near the upper portion of the emitter section 13 are emitted by the time t4 slightly later than the time t3.

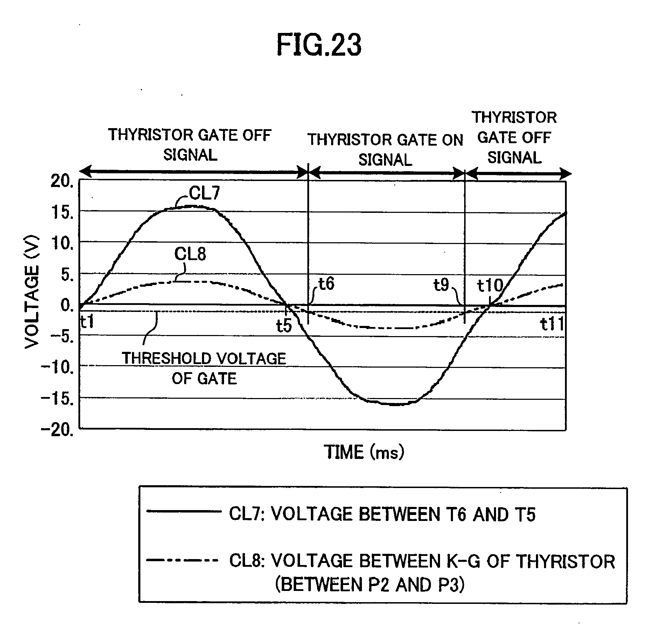

On the other hand, the potential of the terminal T6 with respect to the terminal T5 (hereinafter referred to as "the voltage V65 between the terminals T6 and T5") varies as indicated by a curve CL7 in Fig. 23. The voltage (potential difference) between the point P2 and the point P3 (the potential of the point P2 with reference to the point P3) obtained by dividing the voltage V65 by the resist layer R3 and the resist layer R4 varies as indicated by a line CL8 in Fig. 23. These voltages are synchronous to the AC 210 V and the AC 50 V. The potential difference between the point P2 and the point P3 is the voltage between the cathode K and the gate G of the thyristor 34.

As is previously mentioned, when a forward bias is being applied between the anode A and the cathode K, the thyristor 34 opens the gate when the potential of the gate G is higher than the potential of the cathode K by at least a threshold voltage (e.g., 0.6 V), thereby achieving conduction. In other words, the thyristor 34 allows passage of the forward current when the voltage (potential difference) between the point P2 and the point P3 becomes a negative voltage whose absolute value is larger than the predetermined absolute value (absolute value of the threshold voltage).

Accordingly, after the time t5 at which the voltages (e.g., AC 210 V, AC 50 V, and the like) produced by transforming the voltage generated by the commercial power supply are changed from positive to negative, when the voltage between the point P2 and the point P3 reaches the negative threshold voltage at the time t6, a signal that turns on the thyristor gate is generated. This signal is hereinafter referred to as the "thyristor ON signal".

When the thyristor ON signal is generated at the time t6, the potential of the terminal T6 at which the AC 50 V appears is negative. On the other hand the upper electrode 14-side potential of the electron emission unit EP is positive. Accordingly, since the thyristor 34 is biased in the forward direction, it allows passage of a forward current 12. As a result, the potential of the terminal T6 (i.e.,the alternating voltage AC 50 V appearing at the potential of the terminal T6) is applied to the point P1 which is at the upper electrode 14-side of the electron emission unit EP. In other words, the AC 50 V is applied to the electron emission unit EP at and after the time t6, and thus, it can be said that the power supply voltage varies with forming sinusoidal waves along with the AC 50 V at and after the time t6.

Consequently, current flows from the electron emission unit EP toward the terminal T6 via the connecting line L2. Moreover, current flows from the terminal T3 toward the electron emission unit EP. As a result, the element terminal voltage Vka rapidly drops to a voltage near zero V immediately after the time t6.

Between the time t6 and the time t7, the AC 50 V decreases gradually with forming a sinusoidal wave. That is, a negative voltage whose absolute value gradually increases is applied to the upper electrode 14-side of the electron emission unit EP. Therefore, the negative-side polarization reversal described above occurs between immediately after the time t6 and the time t7. Thus, the element terminal voltage Vka becomes near the negative coercive field voltage which is different from the AC 50 V. Then, the negative-side polarization reversal stops at the time t7, and thereafter, the potential of the electron emission unit EP at the upper electrode 14-side varies with (or follow) the AC 50 V. Note that electron accumulation in the emitter section 13 is substantially completed at the time t7 or immediately after the time t7. Thus, the power supply 30 generates a second power supply voltage, as the drive voltage Vin, whose absolute value increases with forming a sinusoidal wave, so that the potential of the lower electrode 12 is higher than the potential of the upper electrode 14, and the power supply 30 applies the drive voltage Vin to the electron emission unit EP at least during the period starting from the point when no electrons are accumulated in the emitter section 13 and ending at the point when electron is accumulated.

After the time t7, at the time t8, the AC 50 V reaches a negative maximum value and starts to increase again after the time t8. As a result, the potential of the terminal T6 becomes higher than the potential of the point P1 (the potential of the electron emission unit EP at the upper electrode 14-side). Thus, since the thyristor 34 is biased in the reverse direction, it does not allow current to pass through after the time t8. As a result, the drive voltage Vin does not vary with (follow) the AC 50 V but is substantially maintained at the value observed at the time t8.

At and after the time t9, as shown in Fig. 23, the voltage between the point P2 and the point P3 becomes a negative value whose absolute value is smaller than a predetermined absolute value (the absolute value of the threshold voltage). Thus, at the time t9, a thyristor gate OFF signal is generated. Then, at the time t10, the diode 32 is again biased in the forward direction, and the same operation as that after the time t1 is resumed. This summarizes the operation of the electron-emitting apparatus of this embodiment.

Note that the thyristor 34 biased in the forward direction allows forward current to pass through when the thyristor gate ON signal is supplied. Under this state, the thyristor 34 continues to allow (does not block) passage of the forward current even when the thyristor gate OFF signal is supplied. The thyristor 34 blocks the passage when a reverse bias is applied or when the current passing through the thyristor is reduced to a holding current or lower. Thereafter, unless the thyristor ON signal is newly input, the thyristor 34 completely blocks any current.

As described above, the power supply 30 of the electron-emitting apparatus of the first embodiment generates the drive voltage Vin applied to the electron emission unit EP constituted from the electron-emitting element 10 and the protect resistor 20 connected in series. During the period from the point at which the emitter section 13 of the electron-emitting element 10 has electrons accumulated therein till at earliest the point at which the amount of the electron emitted through the micro through hole 14a per unit time reaches the maximum , for example, from the time t1 to the time tₘₐₓ, the power supply 30 generates the first supply voltage Vin1, i.e., AC 210 V, whose absolute value varies with forming a sinusoidal wave and which serves as the drive voltage Vin, so that the potential of the upper electrode 14 is higher than the potential of the lower electrode 12. During the period from the point at which no electrons are accumulated in the emitter section 13 of the electron-emitting element 10 till at earilest the point at which accumulation of the electrons in the emitter section 13 is completed, for example, from the time t6 to the time t8, the power supply 30 generates the second supply voltage Vin2, i.e., AC 50 V, whose absolute value varies with forming a sinusoidal wave and which serves as the drive voltage Vin, so that the potential of the lower electrode 12 is higher than the potential of the upper electrode 14.

Accordingly, the absolute value of the drive voltage Vin applied to the electron emission unit EP gradually increases with forming a sinusoidal wave both at the beginning of electron accumulation in the emitter section 13 and at the beginning of the electron emission from the emitter section 13. Thus, the absolute value of the element terminal voltage Vka also gradually increases by tracking (or following, varying with) the power supply voltage. Thus, the difference between the drive voltage Vin and the element terminal voltage Vka can be small. Consequently, Joule heat can be decreased, and unnecessary power consumption can be reduced.

Since the Joule heat is not high, the temperature of the electron-emitting element 10 is prevented from excessively increasing. Thus, changes in characteristics of the emitter section 13 by heat can be avoided. It also becomes possible to avoid vaporization of substances adhering onto the electron-emitting element 10 and to thereby reduce excess electron emission and damage on the electron-emitting element 10 inflicted by ion bombardment.

In addition, after application of the first power supply voltage AC 210 V for electron emission is started, the absolute value of the first power supply voltage AC 210 V gradually increases. As a result, the inrush current in the emitter section 13 can be reduced, and the rate of change in element terminal voltage after completion of the positive-side polarization reversal in the emitter section caused by application of the first power supply voltage can be decreased. Thus, unnecessary light emission due to unnecessary electron emission caused by inrush current and unnecessary light emission due to unnecessary electron emission caused by a rapid change in element voltage immediately after the positive-side polarization reversal can be avoided.

Moreover, after application of the second power supply voltage AC 50 V for electron accumulation and after completion of the negative-side polarization reversal in the emitter section 13, the absolute value of the second power supply voltage AC 50 V increases gradually. Thus, unnecessary electron emission at an unexpected timing and the resulting unnecessary light emission caused by the unnecessary electron emission at an unexpected timing presumably caused by a rapid change in element terminal voltage immediately after completion of the negative-side polarization reversal in the emitter section can be prevented.

The amplitude of the first power supply voltage AC 210 V is greater than the amplitude of the second power supply voltage AC 50 V. Thus, the power supply voltage suitable for the Q-V characteristic of the electron-emitting element 10 shown in Fig. 7 can be applied. If the first and second power supply voltages have the same amplitude, one of the first and second power supply voltages is excessively large or small, thereby leading to unnecessary power consumption or inability to emit electrons in a required amount. This problem can be avoided by the above-described arrangement.

The power supply 30 includes the switching element SW (thyristor 34) for switching the voltage applied to the electron emission unit EP between the first power supply voltage (voltage AC 210 V) and the second power supply voltage (AC 50 V). This simplifies the structure of the power supply 30.

The power supply 30 also has the transformer 31 for generating the voltage AC 210 V serving as the first power supply voltage and the voltage AC 50 V serving as the second power supply voltage, by transforming the alternating voltage generated from an alternating power supply, which is a single alternating power supply (commercial power supply) that generates a sinusoidal alternating voltage.

Thus, the first power supply voltage and the second power supply voltage, which are sinusoidal and have different amplitudes, can be easily generated from a single alternating power supply. Furthermore, it is possible to use a commercial power supply as the power supply of the electron-emitting element.

In detail, the power supply 30 has the following features:
(1) The power supply 30 uses a commercial power supply, which is an alternating power supply that generates sinusoidal alternating voltage;
(2) The power supply 30 has a single transformer including a primary winding 31 a and a secondary winding 31 b in which a sinusoidal alternating voltage generated from a single alternating source is applied to the primary winding 31 a, for extracting (outputting) a potential difference (AC 210 V) between a reference position (the terminal T3) of the secondary winding 31 b and a first position (the terminal T8) of the secondary winding 31 b so that the potential difference (AC 210 V) can be used as a voltage for generating the first power supply voltage, and for extracting a potential difference (AC50 V) between the reference position (the terminal T3) of the secondary winding 31 b and a second position (the terminal T6) of the secondary winding 31 b so that the potential difference (AC 50V) can be used as a voltage for generating the second power supply voltage.
(3) The power supply 30 includes the reference connecting line L3, the first connecting line L1, and the diode (first rectifier) 32. The connecting line L3 connects the lower electrode 12-side end of the electron emission unit EP to the reference position (the terminal T3) of the secondary winding 31 b. The first connecting line L1 connects the upper electrode 14-side end of the electron emission unit EP to the first position (the terminal T8) of the secondary winding. The first rectifier 32 which is connected to (inserted into) the first connecting line L1 in series and which is biased in the forward direction (i.e., forward-biased) when the potential of the first position (the terminal T8) of the secondary winding 31 b is higher than the potential of the upper electrode 14 (the upper electrode 14-side potential of the electron emission unit EP).
(4) The power supply 30 has the second connecting line L2 and the thyristor 34. The second connecting line L2 connects the upper electrode 14-side end of the electron emission unit EP to the second position (the terminal T6) of the secondary winding 31 b. The thyristor 34 is connected to (inserted into) the second connecting line L2 in series and is a switching element that switches (changes) its state from a current-blocking state to a state in which the switching element allows passage of current in response to a switching control signal input thereto when the switching element is in the current-blocking state. The thyristor 34 is biased in the forward direction when the potential of the second position (the terminal T6) of the secondary winding 31 b is lower than the potential of the upper electrode 14 (the upper electrode 14-side potential of the electron emission unit EP).

These features enable the power supply 30 to generate the first power supply voltage AC 210 V and the second power supply voltage AC 50 V by using the single alternating power supply (e.g., a commercial power supply), the single transformer 31, the single diode 32, and the single thyristor 34 and to apply these voltages to the electron emission unit EP at desirable timings selectively by using the thyristor 34.

Since the switch control signal (the voltage applied between the gate G and the cathode K of the thyristor 34) is generated based on the alternating voltage AC 100 V generated by the single alternating power supply (commercial power supply), no other power supply for generating switching control signals is necessary.

The power supply 30 produces the switching control signal by dividing the alternating voltage (alternating voltage transformed with the transformer 31) synchronous to the alternating voltage generated from the alternating power supply by using the voltage divider circuit BC including the resistors 36 and 37. Thus, the switching control signals can be generated with a significantly simple circuit. Accordingly, the cost of the power supply 30 can be reduced.

Furthermore, the power supply 30 obtains the difference between the voltage AC 50 V appearing at the third position (the terminal T6) of the secondary winding 31 b of the transformer 31 and the voltage AC 39 V appearing at the fourth position (the terminal T5) of the secondary winding 31 b, the difference being an alternating voltage synchronous to the alternating voltage generated from the single alternating power supply. Thus, no additional power supply, transformer, or the like is necessary, and therefore, a less expensive electron-emitting apparatus can be provided.

Note that, at least one of the resistors 36 and 37 in the voltage divider circuit BC is preferably a variable resistor that can change the resistance by external signals or operation. With this feature, by changing the resistance of the variable resistor, the timing of switching between the first power supply voltage and the second power supply voltage can be controlled with a simple configuration. Besides, because the timing of switching can be easily changed with this feature, the length of time in which the second voltage AC 50 V is applied to the electron emission unit EP can be adjusted. Thus, the voltage of the terminals at the both ends of the electron-emitting element 10 (the element terminal voltage) during electron accumulation can be changed, the amount of electrons accumulated in the upper portion of the emitter section 13 can be changed, and thereby, the amount of electrons emitted can be controlled. The voltage divider circuit may be constituted from an inductor and a capacitor. The above-described voltage divider circuit BC including only resistors is preferable since stable voltage can be produced.

### Control of Collector Electrode

The collector voltage applying circuit 50 applies a second collector voltage V2 to the collector electrode 18 so that the collector voltage is changed from the first predetermined voltage to a second predetermined voltage smaller than the first predetermined voltage, at a particular timing during the period from the time point at which "electron emission through the micro through holes 14a is substantially completed" to the time point at which "the gate of the thyristor 34 is turned on". In other words, at this particular timing, the collector voltage applying circuit 50 switches the connecting point to which the fixed connection point of the switching element 52 is connected from the switching point connected to the constant voltage source 53 to the earthed switching pout.

The switching element 52 may be configured such that the earthed switching point is replaced by a floating point connected to nowhere. In such a case, the collector electrode 18 enters a floating state by switching the connecting point to which the fixed connecting point of the switching element 52 is connected from the switching point connected to the constant voltage source 53 to the switching point in the floating state. The state in which the second collector voltage V2 is applied to the collector electrode 18 by earthing the collector electrode 18 and the state in which the collector electrode 18 is put to a floating state are both referred to as "turning off the collector electrode".

When the collector electrode 18 is turned off, the collector electrode 18 either does not generate an electric field that attracts the emitted electrodes or decreases the intensity of such an electric field. As a result, unnecessary electron emission (unnecessary light emission) can be avoided.

Subsequently, the collector voltage applying circuit 50 switches the connecting point to which the fixed connecting point of the switching element 52 is connected from the earthed switching point to the switching point connected to the constant voltage source 53, at a particular timing between the time point at which the electron accumulation in the upper portion of the emitter section 13 is substantially completed and the time point immediately before the next electron emission completion. In other words, the collector voltage applying circuit 50 resumes application of the first collector voltage V1 (= Vc) to the collector electrode 18 at this particular time. This particular time is referred to as the "collector electrode ON time" for the convenient sake.

By this operation, the emitted electrons are accelerated (i.e., given high energy) by the electric field generated by the collector electrode 18 and travel in the upward direction of the upper electrode 14. Thus, since the phosphors 19 are irradiated with electrons having high energy, high luminance is achieved. In other words, since the collector electrode 18 to which the first collector voltage V1 is applied attracts the emitted electrons, a required amount of electrons can reach the collector electrode 18.

By controlling the collector electrode 18 as such, the collector voltage is set to the second predetermined voltage (in this embodiment, 0 V, which is the potential of the ground) or maintained in the floating state at least during the period from start of the voltage decrease to the completion of the electron emission.

Thus, unnecessary electron emission presumably caused by a large inrush current in the emitter section 13 during the electron accumulation can be more securely avoided, and unnecessary electron emission presumably caused by a large rate of change in element terminal voltage Vka that occurs immediately after the completion of the negative-side polarization reversal can be more securely avoided.

The collector electrode ON time may be set as follows:
(a) The collector electrode ON time may be a time point at which the forward current starts to flow in the diode 32.
   By this operation, unnecessary electron emission during the electron accumulation can be avoided. In addition, because the first collector voltage is applied to the collector electrode 18 over the entire period in which electrons are being emitted, the electrons which are normally emitted can be pulled to a region near the collector electrode 18.
(b) The collector electrode ON time may be set at a particular time between the time point immediately after the inrush current caused by the positive-side polarization reversal reaches the maximum and the time point at which the positive-side polarization reversal is completed.
   By this operation, unnecessary electron emission during the electron accumulation and unnecessary electron emission due to large inrush current caused by the positive-side polarization reversal can be avoided. Moreover, after the completion of the positive-side polarization reversal, the first collector voltage is applied to the collector electrode. Thus, the electrons normally emitted after the completion of the positive-side polarization reversal can be led to the collector electrode-side.
(c) The collector electrode ON time may be set at a particular time between the completion of the positive-side polarization reversal and the substantial completion of the electron emission.
   By this operation, the unnecessary electron emission during the electron accumulation period can be avoided. In addition, the unnecessary electron emission due to an inrush current and the like before the completion of the positive-side polarization reversal can be avoided. Moreover, the first collector voltage is applied to the collector electrode before the completion of the electron emission. Thus, the electrons normally emitted can be led to the collector electrode-side. In addition, because the first collector voltage is applied to the collector electrode substantially only during the designed electron emission period, the excessive electron emission can be suitably suppressed.
(d) The collector electrode ON time may be set at a particular time between the completion of the positive-side polarization reversal and the time point at which the amount of the electrons emitted from the emitter section and reaching the collector electrode (the current flowing in the collector electrode) per unit time reaches the maximum .
   By this operation, the unnecessary electron emission during the electron accumulation period can be avoided. Moreover, unnecessary electron emission due to an inrush current and the like before the completion of the positive-side polarization reversal can be avoided. In addition, after the time point at which the current flowing in the collector electrode reaches the maximum, the first collector voltage is applied to the collector electrode. Thus, only the electrons normally emitted can be securely led to the collector electrode-side. In other words, it becomes possible to ensure the required amount of electron emission while avoiding excessive electron emission.
(e) The collector electrode ON time may be set to the time point at which the actual element terminal voltage Vka reaches a predetermined threshold voltage Vth. In this case, the predetermined threshold voltage Vth is preferably selected such that the collector electrode ON time comes between the time point of the completion of the positive-side polarization reversal and the time point at which the current flowing the collector electrode reaches the maximum.

By this operation, unnecessary electron emission during the electron accumulation period can be prevented. Moreover, unnecessary electron emission caused by the inrush current and the like at the start of the increase of the drive voltage Vin can be avoided. Moreover, since the element terminal voltage Vka varies in accordance with the images (i.e., the amount of electrons required to be emitted) to be displayed, the collector electrode can be turned on at an appropriate timing despite the manner in which the element terminal voltage Vka varies. Here, this timing is one that can lead as many electrons normally emitted as possible toward the collector electrode while suppressing unnecessary electron emission.

### Second Embodiment

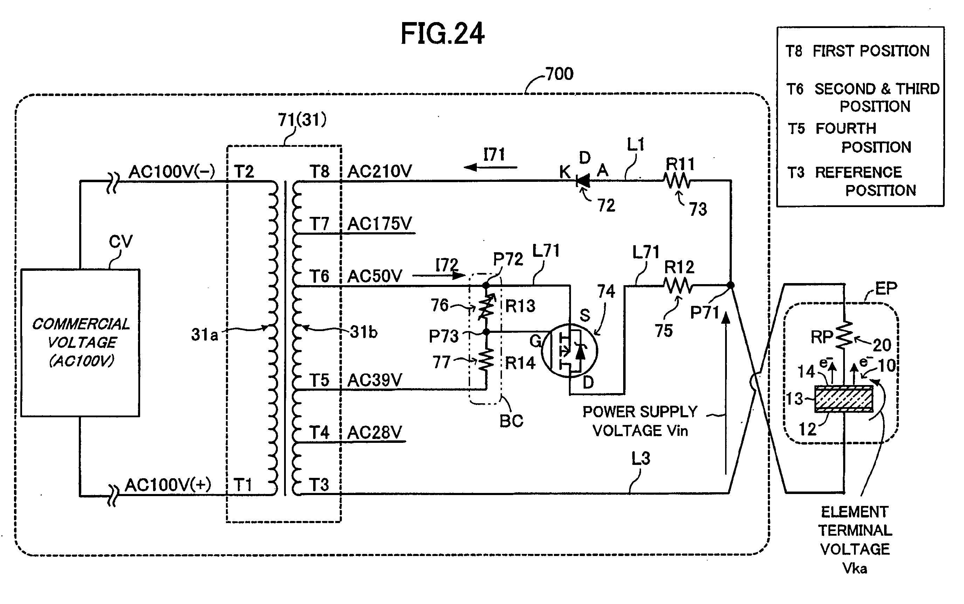

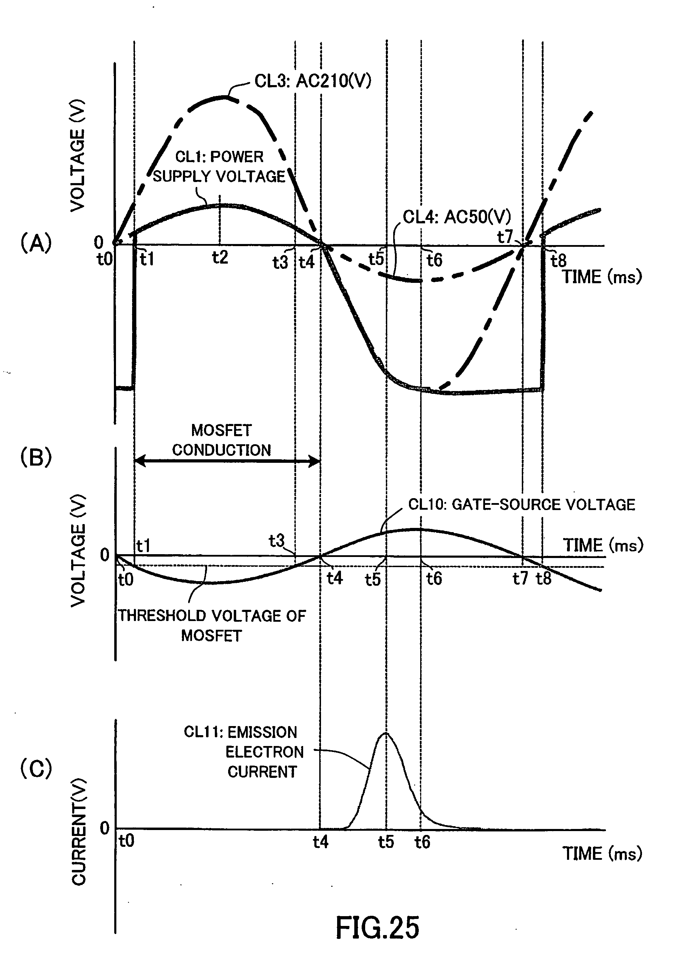

An electron-emitting apparatus according to a second embodiment of the present invention will now be described with reference to Figs. 24 and 25. The electron-emitting apparatus differs from the electron-emitting apparatus of the first embodiment only in that the power supply 30 is replaced by a power supply 70. The description below is mainly directed to this difference.

As with the power supply 30, the power supply 70 generates the first supply voltage Vin1 and the second supply voltage Vin2 synchronous to each other by transforming the commercial power supply CV (AC 100 V) using a transformer 71 and controls the switching operation of the switching element SW including MOS-FET so that the first supply voltage Vin1 or the second supply voltage Vin2 are applied to the electron emission unit EP comprising the electron-emitting element 10 and the protect resistor 20.

However, in the power supply 70, the upper electrode 14 of the electron-emitting element 10 (the upper electrode 14-side of the electron emission unit EP) is connected to the terminal T3 which is at the reference position of the secondary winding 31 b via the connecting line L3, which is the reference connecting line.

More specifically, as shown in Fig. 24, the power supply 70 has the transformer 71 (a single transformer), a diode (a rectifier) 72, a first resistor 73, a P-channel MOS field-effect transistor (FET) 74 serving as a switching element SW, a second resistor 75, a third resistor (fixed or variable) 76, and a fourth resistor 77.

The transformer 71 is of the same type as the transformer 31 described above and has the primary winding 31 a, the secondary winding 31 b, and the terminals T1 to T8. The terminals T1 and T2 at the both ends of the primary winding 31 a are coupled to a commercial power supply, which is an alternating source. Examples of the commercial power supply available in Japan include AC 100 (V), 60 Hz or 50 Hz power supplies. The terminals T1 and T2 are respectively connected to the AC 100 V (+) and the AC 100 V (-) of the commercial power supply. Thus, as with the power supply 30, the voltage signal AC 210 V is generated at the respective terminals.

As a result, as shown in Fig. 24, at the terminals T4, T5, T6, T7, and T8 of the secondary winding 31 b, alternating voltages of 28 V, 39 V, 50 V, 175 V, and 210 V are respectively generated with respect to the reference voltage at the terminal T3. For the ease of explanation, the position of the terminal T8 is referred to as the "first position" of the secondary winding 31 b, the position of the terminal T6 is referred to as the "second and third position" of the secondary winding 31 b, and the position of the terminal T5 is referred to as the "fourth position" of the secondary winding 31 b.

The terminal T8 is connected to the cathode K of the diode 72 via the connecting line L1. The anode A of the diode 72 is connected to the point P71 via the first resistor 73 connected with (inserted into) the connecting line L1 in series. The point P71 is connected to the lower electrode 12 of the electron-emitting element 10. In other words, the point P71 is connected to the lower electrode 12-side of the electron emission unit EP.

The terminal T6 is connected to the source S of the MOS-FET 74 via a connecting line L71. The drain D of the MOS-FET 74 is connected to the point P71 via the second resistor 75 connected with (inserted into) the connecting line L71 in series.

The terminal T5 is connected to the gate G of the MOS-FET 74 via the fourth resistor 77. A point P72 between the source S of the MOS-FET 74 and the terminal T6 is connected to a point P73 between the fourth resistor 77 and the gate G of the MOS-FET 74 via the third resistor 76. Thus, the potential at the point P73 is a ptential obtained by dividing a potential difference between the terminal T6 and the terminal T5 with using the voltage divider circuit BC including the third resistor 76 and the fourth resistor 77.

Therefore, a voltage in proportion to the difference between the alternating voltage AC 50 V at the terminal T6 (the third position of the secondary winding 31 b) and the alternating voltage AC 39 V at the terminal T5 (the fourth position of the secondary winding 31 b) is applied to the gate G of the MOS-FET 74. In the MOS-FET 74, the conduction between the drain D and the source S is achieved when the potential of the gate G becomes smaller than the potential of the source S by a predetermined threshold voltage. This state is also referred to as "turning the MOS-FET 74 ON".

The terminal T3 is connected to the upper electrode 14 of the electron-emitting element 10 (the upper electrode 14-side of the electron emission unit EP) via the connecting line L3 which is the reference connecting line.

The operation of the power supply 70 having the configuration described above will now be described with reference to Figs. 24 and 25. In the description below, the power supply voltage (the drive voltage Vin) is defined as the potential at the point P71 with reference to the potential of the connecting line L3 (the potential of the terminal T3), i.e., power supply voltage = potential at point P71 - potential at terminal T3. In part (A) of Fig. 25, a curve CL1 in a solid line indicates the power supply voltage, a curve CL3 in an alternate long and short dash line indicates the higher alternating voltage AC 210 V at the terminal T8, and a curve CL4 in a two-dot chain line indicates the lower alternating voltage AC 50 V at the terminal T6. In part (B) of Fig. 25, a curve CL10 indicates gate-source voltage (the potential of the gate G with respect to the potential of the source S) of the MOS-FET 74. In part (C) of Fig. 25, a curve CL11 indicates the emission electron current.

Firstly, assume that at a time t0 in Fig. 25, no electrons are accumulated near the upper portion of the of the emitter section 13. Also assume that, at the time t0, the AC 210 V and the AC 50 V at the terminal T8 and the terminal T6, respectively are both zero. The AC 210 V and the AC 50 V gradually increase with forming sinusoidal waves from zero (V) starting from the time t0.

As shown in part (B) of Fig. 25, the gate-source voltage is zero at the time t0. Thus, the MOS-FET 74 is turned off (in a non-conduction, blocking state). The gate-source voltage gradually decreases with forming a sinusoidal wave after the time t0. Thus, at a time t1, the absolute value of the gate-source voltage becomes larger than the absolute value of the negative threshold voltage of the MOS-FET 74. This makes the MOS-FET 74 turn ON and enter in the state in which electric current is allowed to pass through.

At this time, the potential of the terminal T6 at which AC 50 V appears is positive. In contrast, the lower electrode 12-side potential of the electron emission unit EP is negative, as described below. Thus, a current 172 from the terminal T6 passes through the MOS-FET 74 toward the lower electrode 12 of the electron emission unit EP. As a result, the potential (the alternating voltage AC 50 V) of the terminal T6 is applied to the point P71 at the lower electrode 12-side of the electron emission unit EP. In other words, after the time t1, the AC 50 V is applied to the electron emission unit EP, and therefore, the power supply voltage varies with forming a sinusoidal wave along with the AC 50 V.

From the time t1 to a time t2 at which the AC 50 V reaches the positive peak, the AC 50 V increases with forming a sinusoidal wave. As a result, a positive voltage whose absolute value gradually increases is applied to the lower electrode 12-side of the electron emission unit EP. In other words, the potential of the upper electrode 14-side of the electron emission unit EP with respect to the lower electrode 12-side is a negative potential whose absolute value gradually increases. As a result, after the time t1, the above-described negative-side polarization reversal occurs, and electrons are accumulated in the emitter section 13.

The electron accumulation in the emitter section 13 is substantially completed before the time t2. Thus, during the period from the time point at which no electrons are accumulated in the emitter section 13 to at earliest the time point at which the electron accumulation in the emitter section 13 is completed, the power supply 70 generates the second power supply voltage, whose absolute value increases with forming a sinusoidal wave and which serves as the power supply voltage and applies the power supply voltage to the electron emission unit EP so that the potential of the lower electrode 12 is higher the potential of the upper electrode 14.

After the time t2, the AC 50 V gradually decreases with forming a sinusoidal wave, during which the potential of the terminal T6 becomes lower than the potential of the point P71 (the lower electrode 12-side potential of the electron emission unit EP). As a result, the current continues to flow from the lower electrode 12-side of the electron emission unit EP toward the terminal T6 via a parasitic diode in the MOS-FET 74. Thus, the power supply voltage (i.e., the second power supply voltage AC 50 V) applied to the electron emission unit EP is decreased. Note that, in order to prevent current from flowing from the drain D to the source S due to the parasitic diode in the MOS-FET 74, a diode whose forward bias direction is the direction from the MOS-FET 74 toward the second resistor 75 may be inserted in the connecting line L1 between the MOS-FET 74 and the second resistor 75.

At a subsequent time t3, as shown in part (B) of Fig. 25, the absolute value of the gate-source voltage becomes smaller than the absolute value of the negative threshold voltage of the MOS-FET 74. This turns off the MOS-FET 74, i.e., puts the MOS-FET 74 in a non-conducting, current blocking state. However, even in such a case, current flows from the drain D to the source S due to the parasitic diode in the MOS-FET 74.

At a time t4, the voltages (AC 210 V, AC 50 V, and the like) produced by transforming the voltage from the commercial power supply change from the positive values to negative values. After the time t4, the potential of the terminal T8 at which the AC 210 V appears becomes negative. On the other hand, the lower electrode 12-side potential of the electron emission unit EP at the time t4 is zero. Thus, after the time t4, the diode 72 is biased in the forward direction, thereby allowing the forward current 171 to pass through.

Consequently, the potential of the terminal T8 (the alternating voltage AC 210 V appearing at the terminal T8) is applied to the point P71 at the lower electrode 12-side of the electron emission unit EP. In other words, after the time t4, a sinusoidal negative voltage AC 210 V whose absolute value increases gradually is applied to the lower electrode 12-side of the electron emission unit EP. Thus, the upper electrode 14-side potential of the electron emission unit EP with respect to the lower electrode 12 becomes a positive potential whose absolute value increases gradually. This causes the positive-side polarization reversal in the emitter section 13 and the electrons accumulated near the upper portion of the emitter section 13 are emitted in the upward direction through the micro through holes 14a.

At a time t5 after the time t4, the emission electron current indicated by the curve CL5 in part (C) of Fig. 25 reaches the maximum. That is, during the period from the time t4 and till at earliest the time t5, the power supply 70 generates the first power supply voltage, whose absolute value varies with forming a sinusoidal wave and which serves as the power supply voltage, and applies the first power supply voltage to the electron emission unit EP so that the potential of the upper electrode 14 becomes higher than the potential of the lower electrode 12. Here, the time t4 is the time at which the emitter section 13 of the electron-emitting element 10 is in a state in which electrons are accumulated in the emitter section 13, and the time t5 is the time at which the amount of the electrons, accumulated in the emitter section 13, which are being emitted through the micro through holes 14a reaches per unit time reaches the maximum.

At a time t6 after the time t5, the AC 210 V reaches the negative peak. Therefore, after the time t6, the potential at the point P71 (the lower electrode 12-side potential of the electron emission unit EP) becomes lower than the potential of the terminal T8. Thus, the diode 72 is biased in the reverse direction, thereby entering a non-conducting (blocking) state. As a result, the power supply voltage does not change with (follow) the AC 210 V and substantially stays at the level at the time t6. Note that, almost all of the electrons accumulated near the upper portion of the emitter section 13 are emitted by the time point slightly later than the time t6.

The voltages (AC 210 V, AC 50 V, and the like) generated by transforming the voltage supplied from the commercial power supply turn from negative to positive at a time t7. At a time t8 after the time t7, as shown in part (B) of Fig. 25, the absolute value of gate-source voltage becomes larger than the absolute value of the negative threshold voltage of the MOS-FET 74. This turns on the MOS-FET 74 again.

At this time, the potential of the terminal T6 at which the AC 50 appears is positive. On the other hand, the lower electrode 12-side potential of the electron emission unit EP is negative, i.e., about -300 V, which is the peak value of the AC 210 V. Thus, the current 172 flows from the terminal T6 to the lower electrode 12-side of the electron emission unit EP via the MOS-FET 74. Accordingly, the potential (alternating voltage AC 50 V) of the terminal T6 is applied to the point P71 at the lower electrode 12-side of the electron emission unit EP. Subsequently, the same operation as that after the time t1 is repeated.

As described above, during the period from the time t4 till at earliest the time t5, the power supply 70 of the electron-emitting apparatus of the second embodiment also generates the AC 210 V, which is the first power supply voltage Vin1 whose absolute value change by forming a sinusoidal wave and which serves as the drive voltage Vin, so that the potential of the upper electrode 14 is higher than the potential of the lower electrode 12. Here, the time t4 is the time at which the emitter section 13 of the electron-emitting element 10 is in a state in which electrons are accumulated in the emitter section 13, and the time t5 is the time at which the amount of the electrons, accumulated in the emitter section 13, which are being emitted through the micro through holes 14a per unit time reaches the maximum.

In addition, the power supply 70 also generates the AC 50 V, which is the second supply voltage Vin2 whose absolute value gradually increases with forming a sinusoidal wave and which serves as the drive voltage Vin, during the period from the time point at which no electron is accumulated in the emitter section 13 of the electron-emitting element 10 till at earliest the time point at which electrons are accumulated in the emitter section 13 (from the time between the time t1 and the time t2 to the time t4) so that the potential of the lower electrode 12 is higher than the potential of the upper electrode 14. Thus, the same advantages as those of the power supply 30 can be attained.

The power supply 70 has the switching element SW (MOS-FET 74) for switching the state of voltage application to the electron emission unit between the first power supply voltage and the second power supply voltage. This simplifies the structure of the power supply 70.

The power supply 70 also has the transformer 71 for generating the voltage AC 210 V serving as the first power supply voltage and the voltage AC 50 V serving as the second power supply voltage, by transforming the alternating voltage generated from an alternating power supply, which is a single alternating power supply (commercial power supply) that generates a sinusoidal alternating voltage.

Thus, the first power supply voltage and the second power supply voltage, which are sinusoidal and have different amplitudes, can be easily generated from a single alternating power supply only. Furthermore, it is possible to use a commercial power supply as the power supply of the electron-emitting element.

In detail, the power supply 70 has the following features:
(1) The power supply 70 uses a commercial power supply, which is an alternating power supply that generates sinusoidal alternating voltage;
(2) The power supply 70 has a single transformer 71 including a primary winding 31 a and a secondary winding 31 b in which a sinusoidal alternating voltage generated from a single alternating source is applied to the primary winding 31 a, for extracting (outputting) a potential difference (AC 210 V) between a reference position (the terminal T3) of the secondary winding 31 b and a first position (the terminal T8) of the secondary winding 31 b so that the potential difference (AC 210 V) can be used as a voltage for generating the first power supply voltage, and for extracting a potential difference (AC50 V) between the reference position (the terminal T3) of the secondary winding 31 b and a second position (the terminal T6) of the secondary winding 31 b so that the potential difference (AC 50V) can be used as a voltage for generating the second power supply voltage.
(3) The power supply 70 includes the reference connecting line L3, the first connecting line L1, and the diode (rectifier) 72. The connecting line L3 connects the upper electrode 14-side end of the electron emission unit EP to the reference position (the terminal T3) of the secondary winding 31 b. The first connecting line L1 connects the lower electrode 12-side end of the electron emission unit EP to the first position (the terminal T8) of the secondary winding 31 b. The rectifier 72 is connected with (inserted into) the first connecting line L1 in series and is biased in the forward direction when the potential of the first position (the terminal T8) of the secondary winding 31 b is lower than the potential of the lower electrode 12-side potential of the electron emission unit EP.
(4) The power supply 70 has the second connecting line L71 which connects the lower electrode 12-side end of the electron emission unit EP to the second position (the terminal T6) of the secondary winding 31 b, and the MOS-FET 74 which is inserted to the second connecting line L71 in series and which switches (changes) its state from a current-blocking state to a state in which it allows passage of current in response to a switching control signal input thereto when it is in the current-blocking state.

These features enable the power supply 70 to generate the first power supply voltage AC 210 V and the second power supply voltage AC 50 V by using the single alternating supply (e.g., commercial power supply), the single transformer 71, the single diode 72, and the single switching element 74, and to apply these voltages to the electron emission unit EP at desirable timings selectively by using the switching element 74.

Since the switch control signal (the voltage applied between the source S and the gate G of the MOS-FET) for the MOS-FET serving as a switching element 74 is generated based on the alternating voltage AC 100 V generated by the alternating power supply (commercial power supply), no other power supply for generating switching control signals is necessary.

The power supply 70 produces the switching control signal by dividing the alternating voltage (alternating voltage transformed with the transformer 71) synchronous to the alternating voltage generated from the alternating power supply by using the voltage divider circuit BC including the resistors 76 and 77. Thus, the switching control signals can be generated with a significantly simple circuit. Accordingly, the cost of the power supply 70 can be reduced.

Furthermore, the power supply 70 obtains the difference between the voltage AC 50 V appearing at the third position (the terminal T6) of the secondary winding 31 b of the transformer 71 and the voltage AC 39 V appearing at the fourth position (the terminal T5) of the secondary winding 31 b, the difference being an alternating voltage synchronous to the alternating voltage generated from the single alternating power supply. Thus, no additional power supply, transformer, or the like is necessary, and therefore, a less expensive electron-emitting apparatus can be provided.

It should also be noted that, at least one of the resistors 76 and 77 of the voltage divider circuit BC is preferably a variable resistor that can change the resistance by external signals or operation. With this feature, by changing the resistance of the variable resistor, the timing of switching between the first power supply voltage and the second power supply voltage can be controlled with a simple configuration.

### Third Embodiment

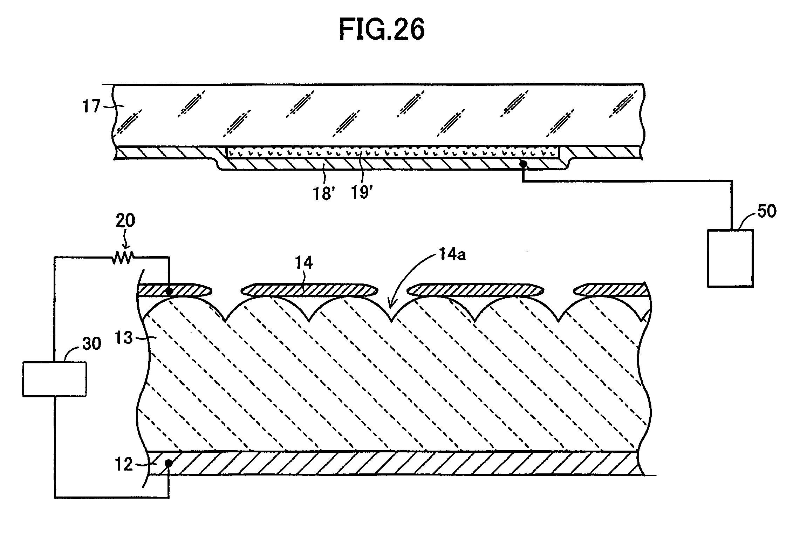

An electron-emitting apparatus according to a third embodiment of the present invention will now be described with reference to Fig. 26. The electron-emitting apparatus is different from the electron-emitting apparatus of the first embodiment in that the collector electrode 18 and the phosphors 19 of the first embodiment are replaced by a collector 18' and phosphors 19', respectively. Thus, the description below mainly directed to this difference.

In the electron-emitting apparatus of the third embodiment, a phosphor 19' is disposed on the back surface (the surface facing the upper electrode 14) of the transparent plate 17, and a collector electrode 18' is disposed to cover the phosphor 19'. The collector electrode 18' has a thickness that allows electrons emitted from the emitter section 13 through the micro through holes 14a in the upper electrode 14 to travel through the collector electrode 18'. The thickness of the collector electrode 18' is preferably 100 nm or less. The thickness of the collector electrode 18' can be larger as the kinetic energy of the emitted electrons is higher.

The configuration of this embodiment is typically employed in cathode ray tubes (CRTs). The collector electrode 18' functions as a metal back. The electrons emitted from the emitter section 13 through the micro through holes 14a in the upper electrode 14 travel through the collector electrode 18', enter the phosphor 19', and excites the phosphor 19', thereby causing light emission. The advantages of this electron-emitting apparatus are as follows:
(a) When the phosphor 19' is not electrically conductive, electrification (negative charging) of the phosphor 19' can be avoided. Thus, the electric field that accelerates electrons can be maintained.
(b) Since the collector electrode 18' reflects light generated by the phosphor 19', the light can be emitted toward the transparent plate 17-side (the emission surface side) with higher efficiency.
(c) Since collision of excessive electrons against the phosphor 19' can be avoided, deterioration of the phosphor 19' and the generation of gas from the phosphor 19' can be avoided.

### Materials of Constituent Components and Production Examples

The materials of the constituent components of the individual electron-emitting elements described above and the method for producing the constituent components will now be described.

### Lower Electrode 12

The lower electrode is composed of an electrically conductive material described above. Examples of the preferable materials for the lower electrode are as follows:
(1) Conductors resistant to high-temperature oxidizing atmosphere (e.g., elemental metals or alloys)
   Examples: high-melting-point noble metals such as platinum, iridium, palladium, rhodium, and molybdenum
   Examples: materials mainly composed of a silver-palladium alloy, a silver-platinum alloy, or a platinum-palladium alloy
(2) Mixtures of ceramics having electrical isolation and being resistant to high-temperature oxidizing atmosphere and elemental metals
   Example: a cermet material of platinum and a ceramic
(3) Mixtures of ceramics having electrical isolation and being resistant to high-temperature oxidizing atmosphere and alloys
(4) Carbon-based or graphite-based materials
   Among these materials above, elemental platinum and materials mainly composed of platinum alloys are particularly preferable. It should be noted that when a ceramic material is added to the electrode material, it is preferable to use 5 to 30 percent by volume of the ceramic material. Materials similar to those of the upper electrode 14 described below may also be usable. The lower electrode is preferably formed by a thick-film forming process. The thickness of the lower electrode is preferably 20 µm or less and mot preferably 5 µm or less.

### Emitter Section 13

The dielectric material that constitutes the emitter section may be a dielectric material having a relatively high relative dielectric constant (for example, a relative dielectric constant of 1,000 or higher) or a ferroelectric material. Examples of the preferable material for the emitter section are as follows:
(1) Barium titanate, lead zirconate, lead magnesium niobate, lead nickel niobate, lead zinc niobate, lead manganese niobate, lead magnesium tantalate, lead nickel tantalate, lead antimony stannate, lead titanate, lead magnesium tungstate, and lead cobalt niobate
(2) Ceramics containing any combination of the substances listed in (1) above
(3) Ceramics described in (2) further containing an oxide of lanthanum, calcium, strontium, molybdenum, tungsten, barium, niobium, zinc, nickel, or manganese; ceramics described in (2) further containing any combination of the oxides described above; and ceramics described in (2) further containing other compounds
(4) Materials mainly containing 50% or more of the materials listed in (1) above
   It is noted that, for example, a two-component system containing lead magnesium niobate (PMN) and lead titanate (PT), i.e., nPMN-mPT (n and m represent molar ratios), can exhibit a decreased Curie point and a large relative dielectric constant at room temperature by increasing the molar ratio of the PMN. In particular, nPMN-mPT having n of 0.85 to 1.0 and m of 1.0-n exhibits a relative dielectric constant of 3,000 or higher and is thus particularly preferable as the material for the emitter section. For example, the nPMN-mPT having n of 0.91 and m of 0.09 exhibits a relative dielectric constant of 15,000 at room temperature. The nPMN-mPT having n of 0.95 and m of 0.05 exhibits a relative dielectric constant of 20,000 at room temperature.

Furthermore, a three-component system containing lead magnesium niobate (PMN), lead titanate (PT), and lead zirconate (PZ), i.e., PMN-PT-PZ, can exhibit a high relative dielectric constant by increasing the molar ratio of PMN. In this three-component system, the relative dielectric constant can be increased by adjusting the composition to near the morphotropic phase boundary (MPB) between the tetragonal and pseudocubic phases or between the tetragonal and rhombohedral phases.

For example, PMN:PT:PZ of 0.375:0.375:0.25 yields a relative dielectric constant of 5,500, and PMN:PT:PZ of 0.5:0.375:0.125 yields a relative dielectric constant of 4,500. These compositions are particularly preferable as the material for the emitter section.

Furthermore, a metal, such as platinum, may be preferably added to the dielectric material as long as the insulating ability can be ensured in order to increase the dielectric constant. For example, 20 percent by weight of platinum may preferably be added to the dielectric material.

A piezoelectric/electrostrictive layer or an antiferroelectric layer may be used as the emitter section. When the emitter section is a piezoelectric/electrostrictive layer, the piezoelectric/electrostrictive layer may be composed of a ceramic containing lead zirconate, lead magnesium niobate, lead nickel niobate, lead zinc niobate, lead manganese niobate, lead magnesium tantalate, lead nickel tantalate, lead antimony stannate, lead titanate, barium titanate, lead magnesium tungstate, lead cobalt niobate, or any combination of these.

Obviously, the emitter section may be composed of a material containing 50 percent by weight or more of the above-described compound as the main component. Of the ceramics described above, a ceramic containing lead zirconate is most frequently used as the constituent material for the piezoelectric/electrostrictive layer that serves as the emitter section.

When the piezoelectric/electrostrictive layer is formed using a ceramic, the ceramic may further contain an oxide of lanthanum, calcium, strontium, molybdenum, tungsten, barium, niobium, zinc, nickel, or manganese, or any combination of these oxides, or other compounds. The ceramic described above may further contain SiO₂, CeO₂, Pb₅Ge₃O₁₁, or any combination of these. In particular, a PT-PZ-PMN-based piezoelectric material containing 0.2 percent by weight of SiO₂, 0.1 percent by weight of CeO₂, or 1 to 2 percent by weight of Pb₅Ge₃O₁₁ is preferable.

In detail, for example, a ceramic mainly composed of lead magnesium niobate, lead zirconate, and lead titanate, and containing lanthanum or strontium in addition to these is particularly preferable.

The piezoelectric/electrostrictive layer may be dense or porous. When the piezoelectric/electrostrictive layer is porous, the void ratio is preferably 40% or less.

When an antiferroelectric layer is used as the emitter section 13, the antiferroelectric layer preferably contains lead zirconate as a main component, lead zirconate and lead stannate as main components, lead zirconate containing lanthanum oxide as an additive, or a lead zirconate and lead stannate containing lead niobate as an additive.

The antiferroelectric layer may be porous. When the antiferroelectric layer is porous, the void ratio thereof is preferably 30% or less.

In particular, strontium tantalate bismuthate (SrBi₂Ta₂O₉) is suitable for the emitter section, since it exhibits low fatigue by repeated polarization reversal. The material exhibiting low fatigue is a laminar ferroelectric compound represented by general formula (BiO₂)²⁺(Aₘ₋₁BₘO₃ₘ₊₁)²⁻. In the formula, the ions of the metal A are Ca²⁺, Sr²⁺, Ba²⁺, Pb²⁺, Bi³⁺, La³⁺, or the like, and the ions of the metal B are Ti⁴⁺, Ta⁵⁺, Nb⁵⁺, or the like. Alternatively, a piezoelectric ceramic based on barium titanate, lead zirconate, or PZT may be combined with an additive to impart semiconductive properties to the ceramic. In such a case, since the emitter section 13 provide an uneven electric field distribution, it becomes possible to concentrate the electric field near the boundary with the upper electrode that contributes to release electrons.

The firing (baking) temperature of the emitter section 13 can be decreased by adding a glass component, such as lead borosilicate glass, or a low-melting-point compound (such as bismuth oxide) other than the glass component to the piezoelectric/electrostrictive/antiferroelectric ceramic.

In forming the emitter section with the piezoelectric/electrostrictive/antiferroelectric ceramic, the emitter section may be formed from a molded sheet, a laminated sheet, or a composite of the molded sheet or the laminated sheet stacked or bonded on a supporting substrate.

An emitter section that is hardly damaged by collision of electrons or ions can be produced by using a material having a high melting point or a high evaporation temperature, e.g., a non-lead material, for the emitter section.

The emitter section may be formed by various thick-film forming processes, such as a screen printing process, a dipping process, an application process, an electrophoresis process, an aerosol deposition process, and a powder-jet deposition process; or by various thin-film forming processes, such as an ion-beam process, a sputtering process, a vacuum deposition process, an ion-plating process, a chemical vapor deposition (CVD) process, and a plating process. In particular, a powdered piezoelectric/electrostrictive material may be molded to form the emitter section, and the molded emitter section may be impregnated with a low-melting-point glass or sol particles to form a film at a temperature as low as 700°C or 600°C or less.

### Upper Electrode 14

An organometal paste that can produce a thin film by firing (baking) is used to form the upper electrode. An example of the organometal paste is a platinum resinate paste. The upper electrode is preferably composed of an oxide that can decrease the fatigue due to polarization reversal or a platinum resinate paste containing an oxide for decreasing the fatigue by polarization reversal. Examples of the oxide that decreases the fatigue due to polarization reversal include ruthenium oxide (RuO₂), iridium oxide (IrO₂), strontium ruthenate (SrRuO₃), La₁₋ₓSrₓCoO₃ (e.g., x = 0.3 or 0.5), La₁₋ₓCaₓMnO₃ (e.g., x = 0.2), and La₁₋ₓCaₓMn_{1-y}Co_{y}O₃ (e.g., x = 0.2, y = 0.05).

It is also preferable to use an aggregate of scale-like substances, such as graphite, or an aggregate of conductive substances containing scale-like substances to form the upper electrode. Since such an aggregate has gaps between scales, the gaps can serve as the micro through holes in the upper electrode, and thus no baking process is needed to form the upper electrode. Alternatively, an organic resin and a metal thin film may be sequentially stacked on the emitter section and baked to burn off the organic resin and to thereby form micro through holes in the metal thin film, which serves as the upper electrode.

The upper electrode may be formed by various thick-film forming processes, such as a screen printing process, a spraying process, a coating process, a dipping process, an application process, and an electrophoresis process; or by various thin-film forming processes, such as a sputtering process, an ion-beam process, a vacuum deposition process, an ion-plating process, a chemical vapor deposition (CVD) process, and a plating process.

As has been described above, the electron-emitting apparatus of each embodiment of the present invention uses the power supply 30 or the power supply 70 to reduce the power consumption and/or to avoid unnecessary electron emission.

Moreover, each electron-emitting apparatus turns off the collector electrode when there is a possibility of occurrence of unnecessary electron emission and turns on the collector electrode when electron emission is necessary. Thus, the electron-emitting apparatus can impart sufficient energy to electrons normally emitted while avoiding unnecessary electron emission, and provides a display that can present satisfactory images. Furthermore, even when the space between the upper electrode 14 and the collector electrode 18 enters a plasma state, the plasma can be eliminated since the collector electrode 18 is intermittently turned off. As a result, continuous generation of intense emission due to a continuing plasma state can be avoided.

In addition, because of the presence of the focusing electrode, the distance between the upper electrode and the collector electrode can be increased since emitted electrons substantially travel in the upward direction of the upper electrode. Thus, dielectric breakdown between the upper electrode and the collector electrode can be reduced or prevented. Because the possibility of dielectric breakdown between the upper electrode and the collector electrode reduces, the first collector voltage V1 (Vc) applied to the collector electrode 18 during the period in which the collector electrode 18 is turned on can be increased. Accordingly, large energy can be imparted to the electrons reaching the phosphors, and therefore, the luminance of the display can be thereby increased.

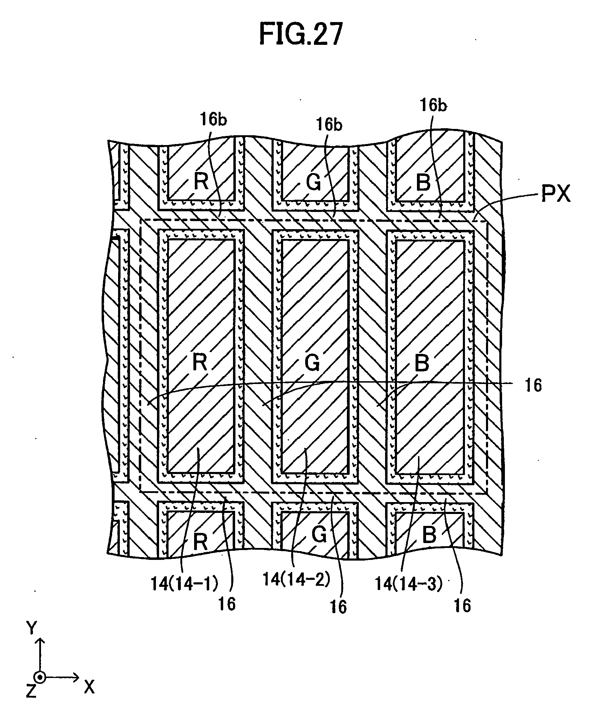

Note that the present invention is not limited to the embodiments described above and various other modifications and alternations are possible without departing from the scope of the invention. For example, as shown in Fig. 27, the focusing electrodes 16 may be formed not only between the upper electrodes 14 adjacent to each other in the X-axis direction but also between the upper electrodes 14 adjacent to each other in the Y-axis direction in a plan view.

According to this arrangement, electrons emitted from the upper electrode 14 of a particular element do not reach the phosphor disposed above the upper electrode 14 of an adjacent element. Thus, color purity can be satisfactorily maintained. In this embodiment, the focusing electrodes 16 are also disposed between the upper electrodes 14 of the elements adjacent to each other in the Y-axis direction. Thus, electrons emitted from the upper electrode 14 of a particular upper electrode 14 do not reach the phosphor disposed above the adjacent upper electrode 14. Thus, blurring of image patterns can be prevented.

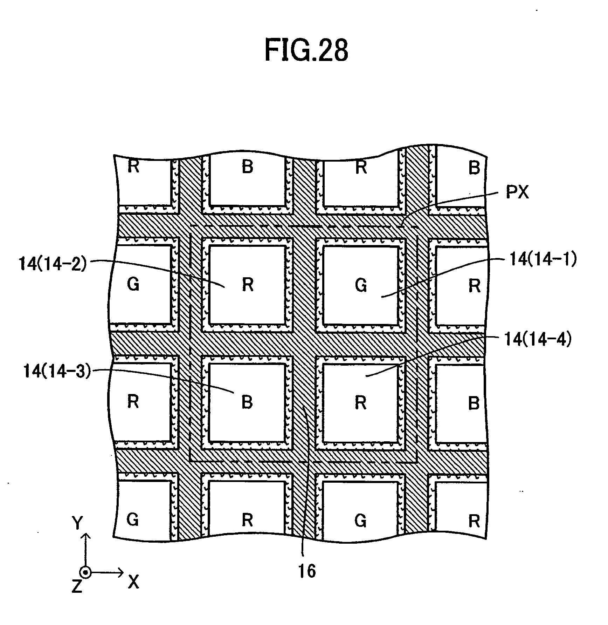

Furthermore, as shown in Fig. 28, one pixel PX of the electron-emitting apparatus may include four elements (a first upper electrode 14-1, a second upper electrode 14-2, a third upper electrode 14-3, and a fourth upper electrode 14-4), and focusing electrodes 16. In such a case, for example, a green phosphor (not shown) is disposed directly above the first upper electrode 14-1, a red phosphor (not shown) is disposed directly above each of the second upper electrode 14-2 and the fourth upper electrode 14-4, and a blue phosphor (not shown) is disposed directly above the third upper electrode 14-3. The focusing electrodes 16 are formed to surround each of the upper electrodes 14. With this arrangement, electrons emitted from the upper electrode 14 of a particular element reach only the phosphor disposed directly above the upper electrode 14. Thus, satisfactory color purity can be maintained, and blurring of the image patterns can be prevented.

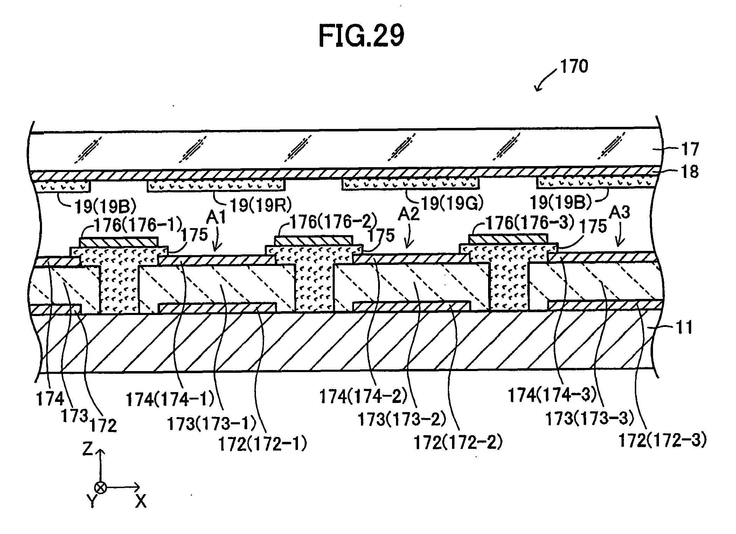

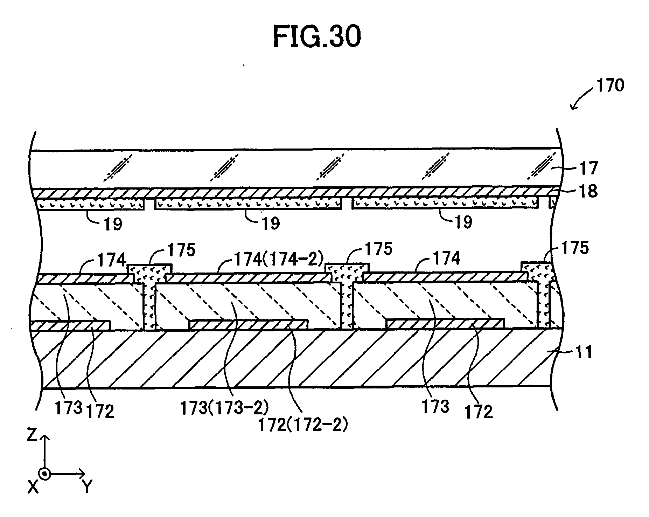

As shown in Figs. 29 and 30, another electron-emitting apparatus 170 of the present invention may include a plurality of completely independent elements aligned on the substrate 11, each element including a lower electrode 172, an emitter section 173, and an upper electrode 174. In this apparatus, the gaps between the elements may be filled with insulators 175, and focusing electrodes 176 may be disposed on the upper surfaces of the insulators 175 between the upper electrodes 174 adjacent to each other in the X-axis direction.

The electron-emitting apparatus 170 can emit electrons from the elements either simultaneously or at independent timings. Thus, an independent collector electrode may be disposed above the upper electrode 174 of the corresponding element, and the collector voltage applying circuit may turn off or on the collector electrode based on the status of the element corresponding to the collector electrode.

Time-varying voltage Vs(t) may be applied to the focusing electrodes 16 or 176. In such a case, for example, a larger negative voltage may be applied to the focusing electrode 16 during the charge accumulation period Td than in the emission period Th so that unnecessary electron emission can be more securely suppressed during the charge accumulation period Td.

Moreover, the focusing electrode 16 may be maintained in the floating state during the charge accumulation period Td, and a predetermined potential may be applied to the focusing electrode 16 during the emission period Th. By this operation, generation of transient current due to capacity coupling between the focusing electrode 16 and the upper electrode 14 (or between the focusing electrode 16 and the lower electrode 12) can be avoided, and unnecessary power consumption can be avoided.

In this embodiment, since simultaneous electron emission is conducted, current due to the electrons emitted toward the collector electrode 18 (or the collector electrode 18', the same hereinafter) flows all at once. Thus, the potential of the collector electrode 18 decreases due to the voltage drop caused by the collector resistor 51 inserted into the collector voltage applying circuit 50 (the collector electrode circuit). This leads to decrease the energy of the electrons colliding with the phosphors 19 (or the phosphors 19', the same hereinafter) and thereby decreases the luminance. When resistance value of the collector resistor 51 is decreased to prevent the decrease in luminance, damage on the collector electrode 18, the phosphors 19, and the electron-emitting element at the time of abnormal discharge (excessive electron emission) becomes large.

Thus, it is effective to suppress the peak value of the collector current by making the timings of the electron emission from the plurality of the electron-emitting elements of the electron-emitting apparatus different from one another. This can be realized by, for example, the following techniques:
Two transformers are prepared. The plurality of electron-emitting elements are divided into two groups, and each group is driven by a different transformer to conduct electron emission operation. More specifically, the primary windings of each transformer are connected to the commercial power supply (a single alternating source) in a different fashion to each other. Here, for a first transformer, as shown in Fig. 21, the terminal T1 is connected to the AC 100 V (-) and the terminal T2 is connected to the AC 100 V (+). For a second transformer, the terminal T1 is connected to the AC 100 V (+) and the terminal T2 is connected to the AC 100 V (-). The secondary windings and the electron-emitting elements in each group is connected as shown in Fig. 21.

By this arrangement, electrons are emitted from the elements of the respective group at timings different from one another by half the cycle of the power supply voltage. Thus, compared to when electrons are simultaneously emitted from all of the elements, the peak of the collector current can be reduced to half. Thus, the luminance can be maintained while protecting the elements.

The substrate 11 may be composed of a material primarily composed of aluminum oxide, a material primarily composed of a mixture of aluminum oxide and zirconium oxide, soda glass, lead glass, borosilicate glass, or quartz glass.

## Claims

1. An electron-emitting apparatus comprising:
an electron emission unit including an electron-emitting element having:
an emitter section made of a dielectric material,
a lower electrode disposed below the emitter section, and
an upper electrode disposed above the emitter section to oppose the lower electrode with the emitter section therebetween, the upper electrode having a plurality of micro through holes, a surface of a periphery of each micro through hole facing the emitter section being apart from the emitter section by a predetermined distance; and
a power supply for generating a power supply voltage applied to the electron emission unit,
wherein electrons are accumulated in the emitter section and the accumulated electrons are emitted through the micro through holes by application of the power supply voltage, wherein,
the power supply is configured so as to generate a first power supply voltage whose absolute value changes with forming a sinusoidal wave and which serves as the power supply voltage so that the potential of the upper electrode is higher than the potential of the lower electrode, at least during the period from the point at which the emitter section of the electron-emitting element has electrons accumulated therein to the point at which the amount of the electron emitted through the micro through holes per unit time reaches the maximum, and is configured so as to generate a second power. supply voltage whose absolute value increases with forming a sinusoidal wave and which serves as the power supply voltage so that the potential of the lower electrode is higher than the potential of the upper electrode, at least during the period between the point at which no electrons are accumulated in the emitter section and the point at which the emitter section has accumulated electrons.

2. The electron-emitting apparatus according to claim 1, wherein the electron emission unit includes a protect resistor connected to the electron-emitting element in series.

3. The electron-emitting apparatus according to claim 1 or 2, wherein the amplitude of the first power supply voltage is larger than the amplitude of the second power supply voltage.

4. The electron-emitting apparatus according to claim 3, wherein the power supply has a switching element that switches the voltage applied to the electron emission unit between the first power supply voltage and the second power supply voltage.

5. The electron-emitting apparatus according to claim 3, wherein the power supply has a transformer connected to a single alternating source generating a sinusoidal alternating voltage, and produces the first power supply voltage and the second power supply voltage by transforming the sinusoidal alternating voltage supplied from the single alternating source.

6. The electron-emitting apparatus according to claim 3, wherein the power supply has:
a single transformer including a primary winding and a secondary winding in which a sinusoidal alternating voltage generated from a single alternating source is applied to the primary winding, for extracting a potential difference between a reference position of the secondary winding and a first position of the secondary winding so that the potential difference is used as a voltage for generating the first power supply voltage, and for extracting a potential difference between the reference position of the secondary winding and a second position of the secondary winding so that the potential difference is used as a voltage for generating the second power supply voltage;
a reference connecting line connecting a lower electrode-side end of the electron emission unit to the reference position of the secondary winding;
a first connecting line connecting an upper electrode-side end of the electron emission unit to the first position of the secondary winding;
a rectifier which is inserted into the first connecting line in series and which is biased in the forward direction when the potential of the first position of the secondary winding is higher than the potential of the upper electrode-side end of the electron emission unit;
a second connecting line connecting the upper electrode-side end of the electron emission unit to the second position of the secondary winding; and
a switching element inserted into the second connecting line in series, the switching element changing its state from a current-blocking state to a state in which the switching element allows passage of current in response to a switching control signal which is input thereto while the switching element is in the current-blocking state.

7. The electron-emitting apparatus according to claim 3, wherein the power supply has:
a single transformer including a primary winding and a secondary winding in which a sinusoidal alternating voltage generated from a single alternating source is applied to the primary winding, for extracting a potential difference between a reference position of the secondary winding and a first position of the secondary winding so that the potential difference is used as a voltage for generating the first power supply voltage, and for extracting a potential difference between the reference position of the secondary winding and a second position of the secondary winding so that the potential difference is used as a voltage for generating the second power supply voltage;
a reference connecting line connecting an upper electrode-side end of the electron emission unit to the reference position of the secondary winding;
a first connecting line connecting a lower electrode-side end of the electron emission unit to the first position of the secondary winding;
a rectifier which is inserted into the first connecting line in series and which is biased in the forward direction when the potential of the first position of the secondary winding is lower than the potential of the lower electrode-side end of the electron emission unit;
a second connecting line connecting the lower electrode-side end of the electron emission unit to the second position of the secondary winding; and
a switching element inserted into the second connecting line in series, the switching element changing its state from a current-blocking state to a state in which the switching element allows passage of current in response to a switching control signal which is input thereto while the switching element is in the current-blocking state.

8. The electron-emitting apparatus according to claim 6 or 7, wherein the power supply is configured to generate the switch control signal based on the alternating voltage generated from the single alternating source.

9. The electron-emitting apparatus according to claim 8, wherein the power supply is configured to generate the switch control signal by dividing an alternating voltage synchronous with the alternating voltage generated from the single alternating source with using a divider circuit including a resistor.

10. The electron-emitting apparatus according to claim 9, wherein the alternating voltage synchronous with the alternating voltage generated from the single alternating source is the difference between a voltage at a third position of the secondary winding of the single transformer and a voltage at a fourth position of the secondary winding of the single transformer.

11. The electron-emitting apparatus according to claim 9 or 10, wherein at least one of the resistors included in the divider circuit is a variable resistor.
